(19) Europäisches Patentamt
European Patent Office
Office européen des brevets

(11) EP 3 865 555 A1

(12) **EUROPEAN PATENT APPLICATION**
published in accordance with Art. 153(4) EPC

(43) Date of publication:
**18.08.2021 Bulletin 2021/33**

(21) Application number: **19871281.2**

(22) Date of filing: **09.10.2019**

(51) Int Cl.:
***C09K 11/06*** *(2006.01)* ***C08J 3/12*** *(2006.01)*
***C08K 5/16*** *(2006.01)* ***C08L 101/00*** *(2006.01)*
***G01N 33/483*** *(2006.01)* ***C09B 5/62*** *(2006.01)*
***C09B 57/08*** *(2006.01)* ***C09B 67/46*** *(2006.01)*

(86) International application number:
**PCT/JP2019/039803**

(87) International publication number:
**WO 2020/075751 (16.04.2020 Gazette 2020/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.10.2018 JP 2018191644**

(71) Applicant: **KONICA MINOLTA, INC.**
**Tokyo 100-7015 (JP)**

(72) Inventors:
- **SAKURAGI, Rie**
  **Tokyo 100-7015 (JP)**
- **TAKAHASHI, Masaru**
  **Tokyo 100-7015 (JP)**
- **NAKAYAMA, Shin**
  **Tokyo 100-7015 (JP)**
- **HITOSUGI, Shumpei**
  **Tokyo 100-7015 (JP)**

(74) Representative: **Henkel & Partner mbB**
**Patentanwaltskanzlei, Rechtsanwaltskanzlei**
**Maximiliansplatz 21**
**80333 München (DE)**

# (54) LIGHT-EMITTING COLORANT-CONTAINING PARTICLE, AND LABELING AGENT FOR PATHOLOGICAL DIAGNOSIS

(57) The present invention addresses the problem of providing: a light-emitting colorant-containing particle which has a small particle diameter and can emit light of high luminance; and a labeling agent for pathological diagnosis that uses the particle. This light-emitting colorant-containing particle contains an organic resin and a light-emitting colorant, and is characterized in that the content of the light-emitting colorant is 10-80 mol% relative to the total amount of the light-emitting colorant and monomers that form the organic resin, and the average particle diameter is 1-100 nm.

EP 3 865 555 A1

## Description

### TECHNICAL FIELD

The present invention relates to a light-emitting colorant-containing particle and a labeling agent for pathological diagnosis and more specifically relates to a light-emitting colorant-containing particle which has a small particle diameter and can emit high luminance light to and a labeling agent for pathological diagnosis using the same.

### BACKGROUND ART

For a light-emitting colorant-containing particle for pathological staining, the particle diameter of the particle is required to be able to be controlled and luminance thereof is required to be able to be adjusted according to the type of target cells.

In monitoring the behavior of a molecular in an organism, it is desirable that observation is carried out by using a particle which has a size smaller than the molecular or a size in a range not inhibiting movement thereof (5 to 300 nm) and is capable of emitting light in an amount enabling observation with a microscope. In addition, while selectivity of light-emitting colorants which can be included in silica gel is limited, when an organic resin is used, various types of light-emitting colorants can be contained therein.

When a target molecular in an organism is observed using a light-emitting colorant-containing particle or the like, even in a case where the target is a huge molecular having hundreds of kilodaltons, a domain, which is a structural unit of protein, pharmaceuticals, and the like, is 100 nm or less, and it has begun to understand that a particle with a small particle diameter of 100 nm or less is often required for investigating the behavior thereof in detail.

Usually, with respect to a particle having a large particle diameter (150 to 200 nm), which has a large volume, a sufficient amount of a colorant can be contained in an organic resin constituting the particle, and there is no problem in luminance for detection sensitivity (for example, see Patent Literature 1).

However, it has been found that when, as described above, the particle diameter is decreased to, for example, a particle diameter of 100 nm or less for investigating the behavior of a target molecular or substance in detail, since the particle diameter approaches the size of protein or pharmaceuticals to be observed, although immunostaining with high accuracy and good spatial resolution can be achieved, luminance sufficient for observation with a microscope cannot be obtained. As the reason why sufficient luminance cannot be obtained, it has been found that since the volume decreases in association with a decrease in the particle diameter, the content of a colorant also decreases; consequently, luminance decreases, and a light-emitting amount sufficient for observation is not obtained. Then, as a result of intensive study for enhancing luminance with a small particle diameter, the present inventors tried to enhance luminance by stuffing a light-emitting colorant into a particle as much as possible. However, luminance was not enhanced even by doing so. As a result of further study, the present inventors have been brought to the fact that the concentration quenching phenomenon as described in Patent Literature 2 occurs due to stuffing of a large amount of a light-emitting colorant, leading to the present invention.

### CITATION LIST

[Patent Literature]

[Patent Literature 1] JP 4249464 B2
[Patent Literature 2] WO 2014/006987

### SUMMARY OF INVENTION

[Technical Problem]

The present invention has been made in view of the above problem and circumstances, and an object of the present invention is to provide a light-emitting colorant-containing particle which has a small particle diameter and can emit high luminance light and to provide a labeling agent for pathological diagnosis using the same.

[Solution to Problem]

The present inventors have conducted intensive study on combinations of a light-emitting colorant and a resin

to achieve the above object and consequently found a light-emitting colorant-containing particle containing a light-emitting colorant and an organic resin, with an average particle diameter being a small particle diameter within a range of 1 to 100 nm, and a fluorescent light-emitting colorant content being 10 mol% or more and 80 mol% or less, leading to the present invention.

That is, the above object of the present invention is achieved by the following means.

1. A light-emitting colorant-containing particle containing an organic resin and a light-emitting colorant, in which a content of the light-emitting colorant is in a range of 10 to 80 mol% based on a total amount of a monomer forming the organic resin and the light-emitting colorant, and the particle has an average particle diameter in a range of 1 to 100 nm.
2. The light-emitting colorant-containing particle according to item 1, in which the content of the light-emitting colorant is in a range of 20 to 60 mol% based on the total amount of a monomer forming the organic resin and the light-emitting colorant.
3. The light-emitting colorant-containing particle according to item 1 or 2, in which an AlogP value of the light-emitting colorant is in a range of 10 to 60.
4. The light-emitting colorant-containing particle according to any one of items 1 to 3, in which a free volume ratio of the light-emitting colorant is in a range of 10 to 70%.
5. The light-emitting colorant-containing particle according to any one of items 1 to 4, in which a maximum fluorescent light emission wavelength measured at 25°C and at a concentration at which a maximum value of absorbance of the light-emitting colorant-containing particle in an aqueous solution becomes 1.0 is at least 5 nm longer than a maximum fluorescent light emission wavelength measured at 25°C and at a concentration at which a maximum value of absorbance of the light-emitting colorant in methanol or ethanol becomes 1.0.
6. The light-emitting colorant-containing particle according to any one of items 1 to 5, in which the light-emitting colorant has a structure represented by general formula (A1) or general formula (B1) below.

[Formula 1]

General formula (A1)

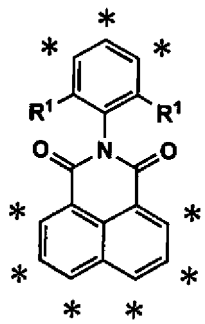

(In the formula, a plurality of $R^1$ each independently represent a hydrogen atom or a substituent, and at least one $R^1$ represents a group having 4 to 30 carbon atoms. The benzene ring or naphthalene ring optionally further has a substituent, and * represents a position of a substituent which the benzene ring or naphthalene ring optionally has.)

[Formula 2]

General Formula (B1)

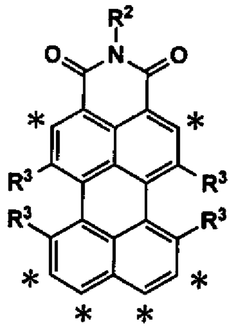

(In the formula, $R^2$ represents a substituted or unsubstituted alkyl group, aryl group, or heteroaryl group. A plurality of $R^3$ each independently represent a hydrogen atom or a group having a structure represented by general formula (B2) below, and at least one $R^3$ represents a group having a structure represented by general formula (B2) below. The naphthalene ring optionally further has a substituent, and * represents a position of a substituent which the naphthalene ring optionally has.)

[Formula 3]

General Formula (B2)

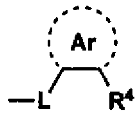

(In the formula, Ar represents an aryl ring or a heteroaryl ring. $R^4$ represents a substituent other than a phenyl group. When there are two or more groups represented by general formula (B2), two $R^4$ are optionally coupled to each other. L represents a single bond, an oxygen atom, a sulfur atom, or -NR'-. R' represents a hydrogen atom, an alkyl group, an aryl group, or a heteroaryl group.)

7. A labeling agent for pathological diagnosis using the light-emitting colorant-containing particle according to any one of items 1 to 6.

ADVANTAGEOUS EFFECT OF INVENTION

A light-emitting colorant-containing particle which has a small particle diameter and can emit high luminance light and a labeling agent for pathological diagnosis using the same can be provided by the above-described means according to the present invention.

While the development mechanism and working mechanism of the effect of the present invention have not been clear, it is inferred as follows.

The colorant weakly interacts with the organic resin (for example, via Van deer Waals force or the like). Hereinafter, optimal conditions enabling high luminance light-emission with a small particle diameter are discussed on the basis of the interaction.

In the case where the content of the light-emitting colorant is less than 10 mol%, since the amount of the light-emitting colorant is small, luminance is not enough, and detection sensitivity decreases. In the case where the content of the light-emitting colorant is 10 to 80 mol%, interaction between the light-emitting colorant and the organic resin sufficiently works, and an appropriate dispersion state of the light-emitting colorant is maintained. Therefore, a large amount of the light-emitting colorant can be kept without occurrence of aggregation of the light-emitting colorant or concentration quenching. In the case where the content of the light-emitting colorant exceeds 80 mol%, the number of sites at which interaction works between the light-emitting colorant and the organic resin decreases, and interaction between the light-emitting colorant and the organic resin is not enough. Therefore, an appropriate dispersion state of the light-emitting colorant is not maintained, and aggregation of the light-emitting colorant and concentration quenching occur.

As such, it is thought that since, even with a small particle diameter, aggregation of the light-emitting colorant in a particle can be suppressed, and concentration quenching can be prevented from occurring in the present invention,

a light-emitting colorant-containing particle capable of emitting high luminance light can be realized.

In addition, it is thought that since variation in luminance is little even in a case of irradiation with excitation light for relatively long time, the present invention can realize excellent light resistance.

Furthermore, a hydrophilic organic resin having high affinity with organism tissues is preferably used as the organic resin for the light-emitting colorant-containing particle. In particular, it is inferred that in the case of using a hydrophilic organic resin, when a hydrophobic colorant is used, the hydrophobic colorant once incorporated in the hydrophilic organic resin maintains stable interaction with the organic resin in an aqueous solution, which is thought to be more preferable.

DESCRIPTION OF EMBODIMENTS

The light-emitting colorant-containing particle of the present invention is a light-emitting colorant-containing particle containing an organic resin and a light-emitting colorant characterized in that a content of the light-emitting colorant is in a range of 10 to 80 mol% based on a total amount of a monomer forming the organic resin and the light-emitting colorant, and the particle has an average particle diameter in a range of 1 to 100 nm. This feature is a common or corresponding technical feature for each of the following embodiments (modes).

As an embodiment of the present invention, a content of the light-emitting colorant preferably is in a range of 20 to 60 mol% based on the total amount of a monomer forming the organic resin and the light-emitting colorant from the viewpoint of suppressing occurrence of concentration quenching and ensuring appropriate luminance in a wide variety of staining modes.

In addition, an AlogP value of the light-emitting colorant preferably is in a range of 10 to 60 because the following effects are obtained: a large amount of the colorant is contained in a particle, and the light-emitting colorant in the organic resin formed has high dispersibility.

In addition, in the present invention, a free volume ratio of the light-emitting colorant preferably is in a range of 10 to 70% because a large amount of the colorant can be stuffed into a particle while suppressing aggregation of the colorant.

In addition, in the present invention, a sterically bulky light-emitting colorant is preferably used, because the light-emitting colorant is made less likely to aggregate in a particle, concentration quenching can be suppressed even when a content ratio of the colorant increases, and luminance can be enhanced.

In addition, it is preferable that a maximum fluorescent light emission wavelength measured at 25°C and at a concentration at which a maximum value of absorbance of the light-emitting colorant-containing particle in an aqueous solution becomes 1.0 is at least 5 nm longer than a maximum fluorescent light emission wavelength measured at 25°C and at a concentration at which a maximum value of absorbance of the light-emitting colorant in methanol or ethanol becomes 1.0, because an effect of keeping, in a stable state, a dispersion state where certain strength of interaction is maintained between the light-emitting colorant and the organic resin in a particle and the light-emitting colorant does not aggregate is obtained.

In addition, as an embodiment of the present invention, the light-emitting colorant preferably has a structure represented by general formula (A1) or general formula (B1) above from the viewpoint of developing the effect of the present invention.

The light-emitting colorant-containing particle of the present invention can be preferably used for a labeling agent for pathological diagnosis.

Hereinafter, the present invention, constituents thereof, and modes and aspects for carrying out the present invention will be described in detail. In the present invention, "to" is used to mean that it encompasses the preceding and following numerical values as a lower limit value and an upper limit value.

In the present invention, a resin particle means a particle consisting of an organic resin.

«Outline of light-emitting colorant-containing particle»

The light-emitting colorant-containing particle of the present invention is a light-emitting colorant-containing particle containing an organic resin and a light-emitting colorant, in which a content of the light-emitting colorant is in a range of 10 to 80 mol% based on the total amount of a monomer forming the organic resin and the light-emitting colorant, and the particle has an average particle diameter in a range of 1 to 100 nm.

In the present invention, the light-emitting colorant-containing particle is a collective term for substances having structure in which single or plural light-emitting colorant molecules are fixed to a resin particle by chemical or physical action, and the configuration thereof is not particularly limited. The light-emitting colorant may adsorb to the organic resin as a whole via weak interaction, or a part thereof may bind to the organic resin via a covalent bond. The state of existence of the organic resin and the colorant in a particle is preferably a state in which the colorant is uniformly dispersed in the organic resin throughout the particle because concentration quenching is less likely to occur.

(Organic resin)

In the present invention, the organic resin refers to a resin including carbon atoms in its main chain and having a molecular weight of 300 or more. Specific examples thereof include a polyolefin resin such as polypropylene, polymethylpentene, and polycyclohexylenedimethylene terephthalate (PCT), a polyamide, polyacetal, polyethylene terephthalate, polybutylene terephthalate, polyphenylene sulfide, polycarbonate, ABS resin, AS resin, acrylic resin, amino-based resin, polyester-based resin, epoxy-based resin, mixed resin of acrylic resin and amino-based resin and polyester-based resin and amino-based resin, cellulose resin, polyethylene resin, polypropylene resin, polystyrene resin, polyvinyl chloride resin, polymethyl methacrylate resin, polyacrylonitrile resin, polyacrylamide resin, polyalcohol resin, polyallyl acetate resin, polyoxymethylene resin, poly-n-butylisocyanate resin, polyethylene oxide resin, 6-nylon resin, poly-$\beta$-oxypropionate resin, phenol resin, urea resin, melamine resin, alkyd melamine resin, unsaturated polyester resin, polyvinyl alcohol resin, poly(N-vinylformamide) resin, poly(N-vinylisobutylamide) resin, polyacrylate resin, poly(N-isopropylacrylamide) resin, poly(N-vinylpyrrolidinone) resin, polyhydroxyethylmethacrylate resin, polyoxyethylenemethacrylate resin, polyethylene glycol dimethyl ether resin, polystyrene sulfonate resin, and the like.

The organic resin of the present invention is preferably a hydrophilic organic resin. Specifically, urea resin, melamine resin, polyvinyl alcohol resin, poly(N-vinylformamide) resin, poly(N-vinylisobutylamide) resin, polyacrylate resin, polyacrylamide resin, poly(N-isopropylacrylamide) resin, poly(N-vinylpyrrolidinone) resin, polyhydroxyethylmethacrylate resin, polyoxyethylenemethacrylate resin, polyethyleneglycoldimethylether resin, polystyrene sulfonate resin, and the like are preferable.

The organic resin according to the present invention may be a thermosetting resin or may be a thermoplastic resin. For example, from the viewpoint that the light-emitting colorant is less likely to be eluted in a penetration step using an organic solvent such as xylene, an organic resin which contains (consists of) a thermosetting resin such as melamine resin and which can fix the light-emitting colorant inside the dense crosslinking structure thereof is preferable.

The thermosetting resin includes a resin containing a structural unit formed from at least one monomer selected from the group consisting of melamine, urea, guanamines (including benzoguanamine, acetoguanamine, and the like), and their derivatives, for example. Any one kind of these monomers may be used alone, or two or more kinds thereof may be used in combination. One or two or more kinds of comonomers other than the above-described compounds may be further used in combination as desired.

Specific examples of the thermosetting resin include melamine-formaldehyde resin and urea-formaldehyde resin.

As raw material for these thermosetting resins, not only the above-described monomers themselves but also a prepolymer obtained by preliminary reacting a monomer with formaldehyde and another compound such as a crosslinking agent may be used. For example, in producing melamine-formaldehyde resin, methylol melamine prepared by condensing melamine and formaldehyde under an alkali condition is usually used as the prepolymer, and said compound may be a further alkyl-etherified (methylated for improving stability in water, butylated for improving solubility in an organic solvent, and the like) product.

In addition, the thermosetting resin described above may be a resin in which at least a part of hydrogen included in its structural units is substituted with a substituent having charge or a substituent capable of forming a covalent bond. Such a thermosetting resin can be synthesized by using, as raw material, a (derivatized) monomer in which at least one hydrogen atom is substituted with the above-described substituent by a known method.

Such a thermosetting resin can be synthesized by a known method. For example, the melamine-formaldehyde resin can be synthesized by heating methylol melamine which has been preliminary prepared as described above and to which a reaction accelerator such as an acid has been added as needed and polycondensing methylol melamine.

On the other hand, examples of the thermosetting resin include a resin containing a structural unit formed from at least one monofunctional monomer (a monomer having, in one molecule, one group pertaining to polymerization reaction, a vinyl group in the above-described examples) selected from the group consisting of (meth)acrylic acid and an alkyl ester thereof, acrylonitrile, and derivatives thereof. Any one kind of these monomers may be used alone, or two or more kinds thereof may be used in combination. One or two or more kinds of comonomers other than the above-described compounds may be further used in combination as desired. The above-described thermosetting resin may include a structural unit formed from a polyfunctional monomer (a monomer having, in one molecule, two or more groups pertaining to polymerization reaction, vinyl groups in the above-described example) such as divinylbenzene, for example, that is, a crosslinking site. Examples thereof include a crosslinked product of polymethyl methacrylate.

Further, the above-described thermosetting resin may include a structural unit having a functional group for modifying a surface of the light-emitting colorant-containing particle in the present invention. For example, when a monomer having an epoxy group such as glycidyl methacrylate is used as raw material, a light-emitting colorant-containing particle in which an epoxy group is oriented to the surface can be prepared. This epoxy group can be converted to an amino group through reaction with an excess amount of ammonia water. Various biological molecules can be introduced into the amino group formed in this manner according to a known method (via a molecule to be a linker as needed).

In the present invention, the content of the light-emitting colorant in the light-emitting colorant-containing particle was calculated by the method shown below.

(1) A molar extinction coefficient (the value thereof is represented by $\varepsilon$) in methanol or ethanol is measured at a certain temperature. The certain temperature is set at a temperature at which the solubility of the light-emitting colorant is highest or relatively high in methanol or ethanol. Between methanol and ethanol, one providing a higher solubility for the light-emitting colorant is selected.

(2) An absorbance of the light-emitting colorant-containing particle in an aqueous solution is measured at the same temperature as (1), and a value of the absorbance per one gram of the light-emitting colorant-containing particle is denoted by A. The light-emitting colorant-containing particle may have a surface modified by an organism-related binding substance or the like or may contain another component other than the organic resin and light-emitting colorant.

(3) The number of moles C [mol] of the light-emitting colorant per one gram of the light-emitting colorant-containing particle is calculated from the values of $\varepsilon$ in (1) and A in (2).

$$A/\varepsilon = \text{amount C [mol] of light-emitting colorant per one gram of particle}$$

(4) An amount of the light-emitting colorant D [g] per one gram of the light-emitting colorant-containing particle is calculated from the molecular weight (Md) of the light-emitting colorant and the value of C [mol] in (3).

$$Md \times C\ [mol] = D\ [g]/\text{particle } 1\ g$$

(5) The number of moles Em of the organic resin is obtained as a quotient by dividing, by the molecular weight (Mp) of the monomer unit of the organic resin, a mass E (= 1 - D [g]) [g] obtained by subtracting the light-emitting colorant amount D [g] per one gram of the light-emitting colorant-containing particle from one gram of the light-emitting colorant-containing particle.

In a case where other components are contained in addition to the organic resin and the light-emitting colorant, the number of moles of the component may be calculated for each component on the basis of the mass and molecular weight of the component, and the total of the numbers of moles of respective components other than the light-emitting colorant may be obtained by as "the number of moles of components other than the colorant." In a case where the mass of each component other than the light-emitting colorant cannot be determined, a quotient obtained by dividing the total of the masses of respective components other than the light-emitting colorant by the molecular weight (Mp) of the monomer unit of the organic resin may be taken as "the number of moles of components other than the colorant."

$$E\ [g]/Mp = Em\ [mol]$$

(6) The number of moles of one gram of the light-emitting colorant-containing particle is calculated, and the corresponding content (mol%) of the light-emitting colorant is calculated.

The number of moles of one gram of light-emitting colorant-containing particle = the number of moles of organic resin per one gram of light-emitting colorant-containing particle Em [mol] + the number of moles of light-emitting colorant per one gram of light-emitting colorant-containing particle C [mol]

$$\text{Content of light-emitting colorant in light-emitting colorant-containing particle (mol\%)} = C/(Em + C) \times 100$$

In a case where other components are contained in addition to the organic resin and the light-emitting colorant, "the number of moles of components other than the colorant" may be used instead of the number of moles of one gram of the light-emitting colorant-containing particle to calculate the content (mol%) of the light-emitting colorant based on "the number of moles of components other than the colorant." In addition, in a case where plural types of the light-emitting colorant are contained in the light-emitting colorant-containing particle, (1) to (3) may be executed for each type of the light-emitting colorant to calculate the number of moles of the corresponding type of the light-emitting colorant, and a ratio between the total of the numbers of moles of respective types of the light-emitting colorant and the number

of moles of one gram of the light-emitting colorant-containing particle or "the number of moles of components other than the colorant" may be calculated as the content (mol%) of the light-emitting colorant.

<Light-emitting colorant>

The light-emitting colorant used in the present invention may be a fluorescent light-emitting colorant or may be a phosphorescent light-emitting colorant. Examples of the light-emitting colorant include a naphthaleneimide-type colorant molecule, a peryleneimide-type colorant molecule, a fluorescein-type colorant molecule, a rhodamine-type colorant molecule, a Cascade-type colorant molecule, a coumarin-type colorant molecule, an eosin-type colorant molecule, an NBD-type colorant molecule, a pyrene-type colorant molecule, a Texas Red-type colorant molecule, a cyanine-type colorant molecule, a squarylium-type colorant, a cyanine-type colorant, an aromatic hydrocarbon-type colorant, an oxazine-type colorant, a carbopyronine-type colorant, a pyrromethene-type colorant, an Alexa Fluor ((R), manufactured by Invitrogen)-type colorant molecule, a BODIPY ((R), manufactured by Invitrogen)-type colorant molecule, a Cy ((R), manufactured by GE Healthcare)-type colorant molecule, a DY-type colorant molecule ((R), manufactured by DYOMICS GmbH), a HiLyte ((R), manufactured by AnaSpec, Inc.)-type colorant molecule, a DyLight ((R), manufactured by Thermo Fisher Scientific K.K.)-type colorant molecule, an ATTO ((R), manufactured by ATTO-TEC GmbH)-type colorant molecule, an MFP ((R), manufactured by MoBiTec GmbH)-type colorant molecule, and the like.

Specifically, 5-carboxy-fluorescein, 6-carboxy-fluorescein, 5,6-dicarboxy-fluorescein, 6-carboxy-2',4,4',5',7,7'-hexachlorofluorescein, 6-carboxy-2',4,7,7'-tetrachlorofluorescein, 6-carboxy-4',5'-dichloro-2',7'-dimethoxyfluorescein, naphthofluorescein, 5-carboxy-rhodamine, 6-carboxy-rhodamine, 5,6-dicarboxy-rhodamine, rhodamine 6G, tetramethylrhodamine, and X-rhodamine; and Alexa Fluor 350, Alexa Fluor 405, Alexa Fluor 430, Alexa Fluor 488, Alexa Fluor 500, Alexa Fluor 514, Alexa Fluor 532, Alexa Fluor 546, Alexa Fluor 555, Alexa Fluor 568, Alexa Fluor 594, Alexa Fluor 610, Alexa Fluor 633, Alexa Fluor 635, Alexa Fluor 647, Alexa Fluor 660, Alexa Fluor 680, Alexa Fluor 700, Alexa Fluor 750, BODIPY FL, BODIPY TMR, BODIPY 493/503, BODIPY 530/550, BODIPY 558/568, BODIPY 564/570, BODIPY 576/589, BODIPY 581/591, BODIPY 630/650, BODIPY 650/665 (above products are manufactured by Invitrogen), methoxycoumarin, eosin, NBD, pyrene, Cy5, Cy5.5, Cy7, and the like can be exemplified. They may be used independently, or a mixture of several kinds thereof may be used. As especially preferable light-emitting colorants, a naphthaleneimide-type colorant molecule and a peryleneimide-type colorant molecule can be exemplified.

[Imide derivative]

The light-emitting colorant according to the present invention can include imide derivatives of a naphthaleneimide-type colorant molecule and a peryleneimide-type colorant molecule.

These colorants have a feature of suppressing concentration quenching even when the colorant content increases and improving the light emission quantum yield by introducing a bulky substituent causing steric hindrance shown in (A) and (B) below. Accordingly, these colorants can be preferably used in the present invention. Hereinafter, explanation will be given using a peryleneimide derivative as an example.

(A) A relatively large substituent R is introduced into the ortho position of the phenyl group of N-phenylimide structure. As the phenyl group is oriented vertical to the perylene ring due to steric hindrance between a carbonyl group of the imide and the relatively large substituent on the ortho position of the phenyl group of N-phenylimide structure, the substituent R on the ortho position effectively shields the $\pi$ plane.
(B) An aryl group having an ortho-substituent R is introduced into a bay area of the perylene ring.
Since the aryl group (in this case, phenyl group) is oriented vertical to the perylene ring due to steric crowding in the bay area of the perylene ring, the substituent R on the ortho position effectively shields the $\pi$ plane.

Hereinafter, a compound having a structure represented by general formula (A1) or general formula (B1) will be described.

[Imide derivative having a structure represented by general formula (A1)]

[Formula 4]

General formula (A1)

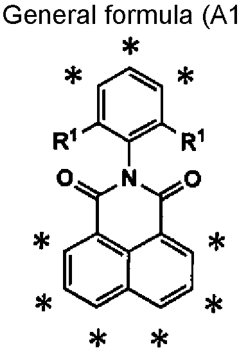

(In the formula, a plurality of $R^1$ each independently represent a hydrogen atom or a substituent, and at least one $R^1$ represents a group having 4 to 30 carbon atoms. The benzene ring or naphthalene ring optionally further has a substituent, and * represents a position of a substituent which the benzene ring or naphthalene ring optionally has.)

By virtue of the bulky (the number of carbons of four or more) substituent present on the ortho position of the phenyl group substituting on the nitrogen atom of the imide, the $\pi$ plane (naphthalene ring in this case) is shielded, and a high light emission quantum yield can be exhibited.

The substituent which the compound optionally has on the position represented by * is not particularly limited.

Specifically, an alkyl group (for example, a methyl group, an ethyl group, a propyl group, an isopropyl group, a tert-butyl group, a pentyl group, a hexyl group, an octyl group, a dodecyl group, a tridecyl group, a tetradecyl group, a pentadecyl group, and the like), a cycloalkyl group (for example, a cyclopentyl group, a cyclohexyl group, and the like), an alkenyl group (for example, a vinyl group, an allyl group, and the like), an alkynyl group (for example, an ethynyl group, a propargyl group, and the like), an aromatic hydrocarbon group aryl group (for example, a phenyl group, a p-chlorophenyl group, a mesityl group, a tolyl group, a xylyl group, a naphthyl group, an anthryl group, an azulenyl group, an acenaphthenyl group, a fluorenyl group, a phenanthryl group, an indenyl group, a pyrrenyl group, a biphenylyl group, and the like), an aromatic heterocyclic group heteroaryl group (for example, a pyridyl group, a pyrimidinyl group, a furyl group, a pyrrolyl group, an imidazolyl group, a benzimidazolyl group, a pyrazolyl group, a pyrazinyl group, a triazolyl group (for example, a 1,2,4-triazol-1-yl group, a 1,2,3-triazol-1-yl group, and the like), a pyrazolo triazolyl group, an oxazolyl group, a benzoxazolyl group, a thiazolyl group, an isoxazolyl group, an isothiazolyl group, a furazanyl group, a thienyl group, a quinolyl group, a benzofuryl group, a dibenzofuryl group, a benzothienyl group, a dibenzothienyl group, an indolyl group, a carbazolyl group, a carbolinyl group, a diazacarbazolyl group (indicating a group in which one of carbon atoms constituting the carboline ring of the above-mentioned carbolinyl group is substituted with a nitrogen atom), a quinoxalinyl group, a pyridazinyl group, a triazinyl group, a quinazolinyl group, a phthalazinyl group, and the like), a heterocyclic group (for example, a pyrrolidyl group, an imidazolydyl group, a morpholyl group, an oxazolydyl group, and the like), an alkoxy group (for example, a methoxy group, an ethoxy group, a propyloxy group, a pentyloxy group, a hexyloxy group, an octyloxy group, a dodecyloxy group, and the like), a cycloalkoxy group (for example, a cyclopentyloxy group, a cyclohexyloxy group, and the like), an aryloxy group (for example, a phenoxy group, a naphthyloxy group, and the like), an alkylthio group (for example, a methylthio group, an ethylthio group, a propylthio group, a pentylthio group, a hexylthio group, an octylthio group, a dodecylthio group, and the like), a cycloalkylthio group (for example, a cyclopentylthio group, a cyclohexylthio group, and the like), an arylthio group (for example, a phenylthio group, a naphthylthio group, and the like), an alkoxycarbonyl group (for example, a methyloxycarbonyl group, an ethyloxycarbonyl group, a butyloxycarbonyl group, an octyloxycarbonyl group, a dodecyloxycarbonyl group, and the like), an aryloxycarbonyl group (for example, a phenyloxycarbonyl group, a naphthyloxycarbonyl group, and the like), a sulfamoyl group (for example, an aminosulfonyl group, a methylaminosulfonyl group, a dimethylaminosulfonyl group, a butylaminosulfonyl group, a hexylaminosulfonyl group, a cyclohexylaminosulfonyl group, an octylaminosulfonyl group, a dodecylaminosulfonyl group, a phenylaminosulfonyl group, a naphthylaminosulfonyl group, a 2-pyridylaminosulfonyl group, and the like), an acyl group (for example, an acetyl group, an ethylcarbonyl group, a propylcarbonyl group, a pentylcarbonyl group, a cyclohexylcarbonyl group, an octylcarbonyl group, a 2-ethylhexylcarbonyl group, a dodecylcarbonyl group, a phenylcarbonyl group, a naphthylcarbonyl group, a pyridylcarbonyl group, and the like), an acyloxy group (for example, an acetyloxy group, an ethylcarbonyloxy group, a butylcarbonyloxy group, an octylcarbonyloxy group, a dodecylcarbonyloxy group, a phenylcarbonyloxy group, and the like), an amido group (for example, a methylcarbonylamino group, an ethylcarbonylamino group, a dimethylcarbonylamino group, a propylcarbonylamino group, a pentylcarbonylamino group, a cyclohexylcarbonylamino group, a 2-ethylhexylcarbonylamino group, an octylcarbonylamino group, a dodecylcarbonylamino group, a phenylcarbonylamino group, a naphthylcarbonylamino group, and the like), a carbamoyl group (for example,

an aminocarbonyl group, a methylaminocarbonyl group, a dimethylaminocarbonyl group, a propylaminocarbonyl group, a pentylaminocarbonyl group, a cyclohexylaminocarbonyl group, an octylaminocarbonyl group, a 2-ethylhexylaminocarbonyl group, a dodecylaminocarbonyl group, a phenylaminocarbonyl group, a naphthylaminocarbonyl group, a 2-pyridylaminocarbonyl group, and the like), an ureido group (for example, a methylureido group, an ethylureido group, a pentylureido group, a cyclohexylureido group, an octylureido group, a dodecylureido group, a phenylureido group, a naphthylureido group, a 2-pyridylaminoureido group, and the like), a sulfinyl group (for example, a methylsulfinyl group, an ethylsulfinyl group, a butylsulfinyl group, a cyclohexylsulfinyl group, a 2-ethylhexylsulfinyl group, a dodecylsulfinyl group, a phenylsulfinyl group, a naphthylsulfinyl group, a 2-pyridylsulfinyl group, and the like), an alkylsulfonyl group (for example, a methylsulfonyl group, an ethylsulfonyl group, a butylsulfonyl group, a cyclohexylsulfonyl group, a 2-ethylhexylsulfonyl group, a dodecylsulfonyl group, and the like), an arylsulfonyl group or heteroarylsulfonyl group (for example, a phenylsulfonyl group, a naphthylsulfonyl group, a 2-pyridylsulfonyl group, and the like), an amino group (for example, an amino group, an ethylamino group, a dimethylamino group, a diphenylamino group, a diisopropylamino group, a di-tert-butyl group, a cyclohexylamino group, a butylamino group, a cyclopentylamino group, a 2-ethylhexylamino group, a dodecylamino group, an anilino group, a naphthylamino group, a 2-pyridylamino group, and the like), a halogen atom (for example, a fluorine atom, a chlorine atom, a bromine atom, and the like), a fluorinated hydrocarbon group (for example, a fluoromethyl group, a trifluoromethyl group, a pentafluoroethyl group, a pentafluorophenyl group, and the like), a cyano group, a nitro group, a hydroxy group, a mercapto group, a silyl group (for example, a trimethylsilyl group, a triisopropylsilyl group, a triphenylsilyl group, a phenyldiethylsilyl group, and the like), a phosphono group, a carboxy group, and a sulfo group are exemplified.

In addition, these substituents may be further substituted with any of the above-described substituents. Furthermore, these substituents may bind to each other to form a ring. The ring structure formed by substituents adjacent to each other may be an aromatic ring, an aliphatic ring, or a ring containing a heteroatom. Further, the ring structure may be a condensed ring of two or more rings.

It is preferable that no substituent is present on the * position, or the substituent is an alkyl group, a halogen atom, a cyano group, a carboxylic acid anhydride in which two carboxylic acids are condensed, or a condensed ring in which substituents bind to each other.

$R^1$ each independently represents a hydrogen atom or a substituent, and at least one $R^1$ represents a group having 4 to 30 carbon atoms.

Specifically, the substituent represented by $R^1$ can be selected from the above-described substituents which * optionally has. However, at least one $R^1$ represents a group having 4 to 30 carbon atoms. With a group having 4 to 30 carbon atoms, the phenyl group substituting on the nitrogen atom is oriented vertical to the naphthalene ring due to steric hindrance between the carbonyl groups of the imide and $R^1$. Therefore, the substituent $R^1$ on the ortho position effectively shields the $\pi$ plane. In addition, $R^1$ preferably has an oxygen atom or sulfur atom in its carbon chain. More preferably, $R^1$ has an oxygen atom in its carbon chain. When $R^1$ has an oxygen atom or sulfur atom in its carbon chain, the structure becomes more flexible, and a $\pi$ plane shielding effect of $R^1$ can be enhanced.

$R^1$ is preferably an alkyl group (for example, a tert-butyl group, a pentyl group, a hexyl group, an octyl group, a dodecyl group, a tridecyl group, a tetradecyl group, a pentadecyl group, a 3-ethylpentyl group, and the like), a cycloalkyl group (for example, a cyclopentyl group, a cyclohexyl group, a cyclohexylethyl group, and the like), an alkenyl group (for example, a propenyl group, a hexenyl group, and the like), an alkynyl group (for example, a propynyl group, a hexynyl group, a phenylethynyl group, and the like), an aryl group (for example, a phenyl group, a p-chlorophenyl group, a mesityl group, a tolyl group, a xylyl group, a naphthyl group, an anthryl group, an azulenyl group, an acenaphthenyl group, a fluorenyl group, a phenanthryl group, an indenyl group, a pyrenyl group, a biphenylyl group, and the like), a heteroaryl group (for example, a pyridyl group, a pyrimidyl group, a furyl group, a pyrrolyl group, a benzimidazolyl group, a pyrazolyl group, a pyrazinyl group, a benzoxazolyl group, a thienyl group, a quinolyl group, a benzofuryl group, a dibenzofuryl group, a benzothienyl group, a dibenzothienyl group, an indolyl group, a carbazolyl group, a carbolinyl group, a diazacarbazolyl group (indicating a group in which one of carbon atoms constituting the carboline ring of the above-mentioned carbolinyl group is substituted with a nitrogen atom), a quinoxalinyl group, a pyridazinyl group, a triazinyl group, a quinazolinyl group, a phthalazinyl group, and the like), a heterocyclic group (for example, a pyrrolidyl group, an imidazolydyl group, a morpholyl group, an oxazolydyl group, and the like), an alkoxy group (for example, a pentyloxy group, a hexyloxy group, an octyloxy group, a dodecyloxy group, a 2-ethylbutyloxy group, and the like), a cycloalkoxy group (for example, a cyclopentyloxy group, a cyclohexyloxy group, and the like), an aryloxy group (for example, a phenoxy group, a naphthyloxy group, and the like), an alkylthio group (for example, a pentylthio group, a hexylthio group, an octylthio group, a dodecylthio group, and the like), a cycloalkylthio group (for example, a cyclopentylthio group, a cyclohexylthio group, and the like), an arylthio group (for example, a phenylthio group, a naphthylthio group, and the like), an alkoxycarbonyl group (for example, a butyloxycarbonyl group, an octyloxycarbonyl group, a dodecyloxycarbonyl group, and the like), an aryloxycarbonyl group (for example, a phenyloxycarbonyl group, a naphthyloxycarbonyl group, and the like), a sulfamoyl group (for example, a butylaminosulfonyl group, a hexylaminosulfonyl group, a cyclohexylaminosulfonyl group, an octylaminosulfonyl group, a dodecylaminosulfonyl group, a phenylaminosulfonyl group, a naphthylaminosulfonyl group, a 2-pyridylaminosulfonyl group, and the like), an acyl group (for example, a butylcarbonyl group, a pentylcarbonyl group, a cyclohexylcarbonyl group, an octylcarbonyl group, a 2-ethylhexylcarbonyl group, a dodecylcarbonyl group, a phenylcarbonyl group, a naphthylcarbonyl group, a pyridylcarbonyl group, and the like), an acyloxy group (for example, a butylcarbonyloxy group, an octylcarbonyloxy group, a dodecylcarbonyloxy group, a phenylcarbonyloxy group, and the like), an amido group (for example, a propylcarbonylamino group, a pentylcarbonylamino group, a cyclohexylcarbonylamino group, a 2-ethylhexylcarbonylamino group, an octylcarbonylamino group, a dodecylcarbonylamino group, a phenylcarbonylamino group, a naphthylcarbonylamino group, and the like), a carbamoyl group (for example, a diethylaminocarbonyl group, a propylaminocarbonyl group, a pentylaminocarbonyl group, a cyclohexylaminocarbonyl group, an octylaminocarbonyl group, a 2-ethylhexylaminocarbonyl group, a dodecylaminocarbonyl group, a phenylaminocarbonyl group, a naphthylaminocarbonyl group, a 2-pyridylaminocarbonyl group, and the like), an ureido group (for example, a pentylureido group, a cyclohexylureido group, an octylureido group, a dodecylureido group, a phenylureido group, a naphthylureido group, a 2-pyridylaminoureido group, and the like), a sulfinyl group (for example, a butylsulfinyl group, a cyclohexylsulfinyl group, a 2-ethylhexylsulfinyl group, a dodecylsulfinyl group, a phenylsulfinyl group, a naphthylsulfinyl group, a 2-pyridylsulfinyl group, and the like), an alkylsulfonyl group (for example, a butylsulfonyl group, a cyclohexylsulfonyl group, a 2-ethylhexylsulfonyl group, a dodecylsulfonyl group, and the like), an arylsulfonyl group or heteroarylsulfonyl group (for example, a phenylsulfonyl group, a naphthylsulfonyl group, a 2-pyridylsulfonyl group, and the like), an amino group (for example, a diphenylamino group, a diisopropylamino group, a cyclohexylamino group, a butylamino group, a cyclopentylamino group, a 2-ethylhexylamino group, a dodecylamino group, an anilino group, a naphthylamino group, a 2-pyridylamino group, and the like), a fluorinated hydrocarbon group (for example, a decafluorobutyl group, a pentafluorophenyl group, and the like), or a silyl group (for example, a triethylsilyl group, a triisopropylsilyl group, a triphenylsilyl group, a phenyldiethylsilyl group, and the like).

$R^1$ is more preferably a bulky group and includes an aryl group, a heteroaryl group, an alkyl group containing a secondary or higher carbon (for example, a secondary carbon: isobutyl group, cyclohexyl group, cyclopentyl group, and cholesteryl group, a tertiary carbon: tert-butyl group, adamantyl group, and [2,2,2]bicyclooctyl group, and the like), a tertiary amino group (for example, a diethylamino group, a diphenylamino group, and the like), a tertiary silyl group (for example, a triisopropylsilyl group, a triphenylsilyl group, a phenyldiethylsilyl group, and the like), and the like. The terminal of an alkyl group, alkenyl group, alkynyl group, alkoxy group, acyl group, acyloxy group, or amide group can also have such a bulky group.

[Imide derivative having a structure represented by general formula (A2-1) to general formula (A2-6)]

The imide derivative having a structure represented by general formula (A1) preferably has a structure represented by general formula (A2-1) to general formula (A2-6) below.

[Formula 5]

General formula (A2-1)

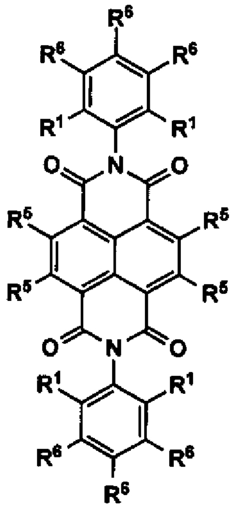

General formula (A2-2)

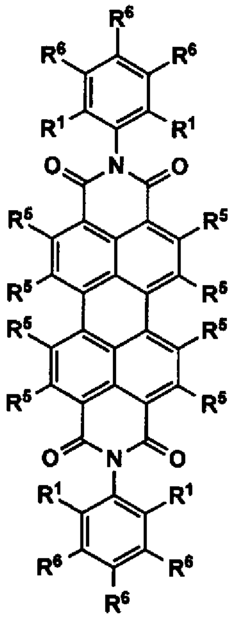

General formula (A2-3)

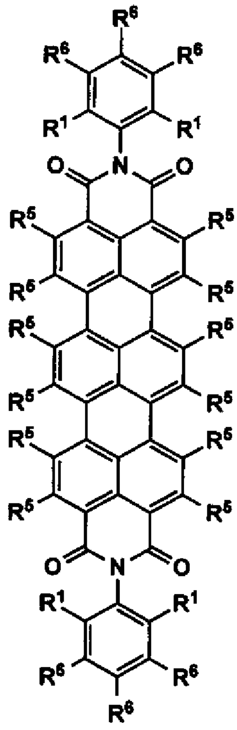

General formula (A2-4)

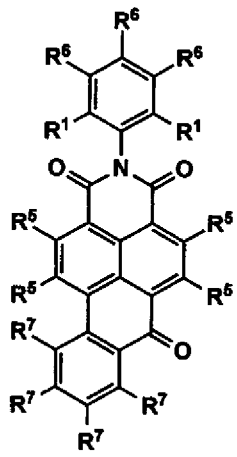

General formula (A2-5)

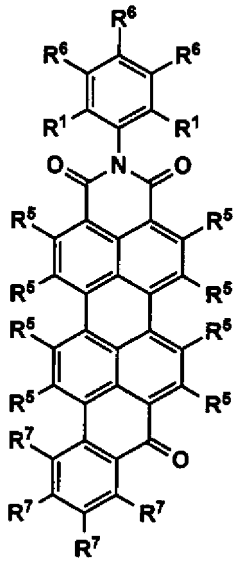

General formula (A2-6)

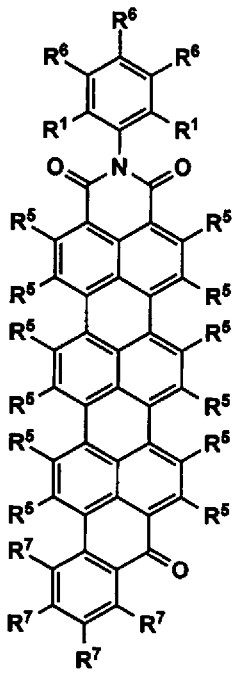

(In the formulae, a plurality of $R^1$ each independently represent a hydrogen atom or a substituent, and at least one $R^1$ represents a group having 4 to 30 carbon atoms. $R^5$, $R^6$, and $R^7$ each independently represent a hydrogen atom, an alkyl group, an aryl group, a heteroaryl group, an alkenyl group, an alkynyl group, an alkoxy group, or an aryloxy group.)

[Imide derivative having a structure represented by general formula (A3)]

The imide derivative having a structure represented by general formula (A2-2) preferably has a structure represented by general formula (A3) below.

[Formula 6]

General formula (A3)

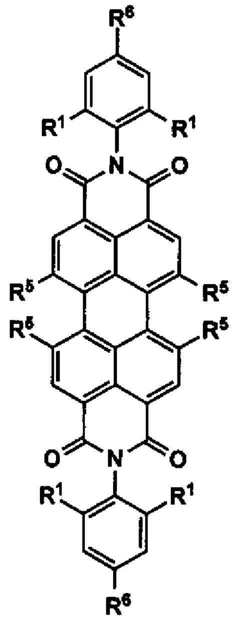

(In the formula, a plurality of $R^1$ each independently represent a hydrogen atom or a substituent, and at least one $R^1$ represents a group having 4 to 30 carbon atoms. A plurality of $R^5$ each independently represent a hydrogen atom, an alkyl group, an aryl group, a heteroaryl group, an alkenyl group, an alkynyl group, an alkoxy group, or an aryloxy group. $R^6$ each independently represents a hydrogen atom, an alkyl group, an aryl group, a heteroaryl group, an alkenyl group, an alkynyl group, an alkoxy group, or an aryloxy group.)

A perylene bisimide derivative not only shows high light emission quantum yield but also shows high light resistance and therefore is desirable.

$R^5$ each independently represents a hydrogen atom, an alkyl group, an aryl group, a heteroaryl group, an alkenyl group, an alkynyl group, an alkoxy group, or an aryloxy group and has the same meaning as $R^5$ shown in general formula (A2).

$R^6$ each independently represents a hydrogen atom, an alkyl group, an aryl group, a heteroaryl group, an alkenyl group, an alkynyl group, an alkoxy group, or an aryloxy group and has the same meaning as $R^6$ shown in general formula (A2).

[Imide derivative having a structure represented by general formula (A4)]

The imide derivative having a structure represented by general formula (A3) preferably has a structure represented by general formula (A4) below.

[Formula 7]

General formula (A4)

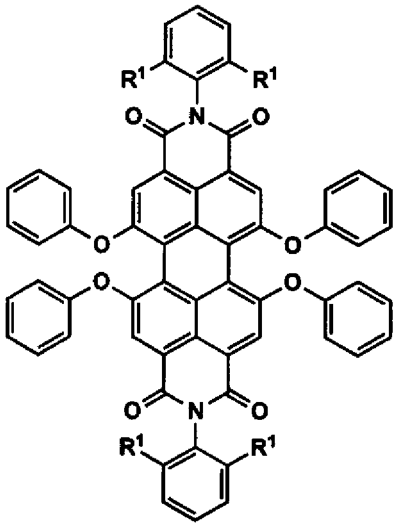

(In the formula, a plurality of $R^1$ each independently represent a hydrogen atom or a substituent, and at least one $R^1$ represents a group having 4 to 30 carbon atoms.)

When a phenoxy group is present in the bay areas, solubility can be improved, and a longer wavelength can be achieved, which is desirable as a fluorescent light-emitting colorant.

$R^1$ each independently represents a hydrogen atom substituent, and at least one $R^1$ represents a group having 4 to 30 carbon atoms.

[Imide derivative having a structure represented by general formula (B1)]

The imide derivative of the present invention preferably has a structure represented by general formula (B1).

[Formula 8]

General formula (B1)

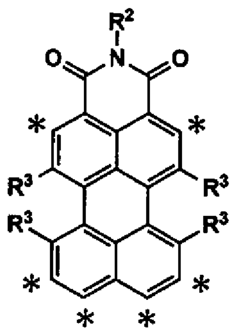

(In the formula, $R^2$ represents a substituted or unsubstituted alkyl group, aryl group, or heteroaryl group. A plurality of $R^3$ each independently represent a hydrogen atom or a group having a structure represented by general formula (B2) below, and at least one $R^3$ represents a group having a structure represented by general formula (B2) below. The naphthalene ring optionally further has a substituent, and * represents a position of a substituent which the naphthalene ring optionally has.)

[Formula 9]

General formula (B2)

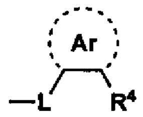

(In the formula, Ar represents an aryl ring or a heteroaryl ring. $R^4$ represents a substituent other than a phenyl group. When two or more groups represented by general formula (B2) are present, two $R^4$ are optionally coupled to each other. L represents a single bond, an oxygen atom, a sulfur atom, or -NR'-. R' represents a hydrogen atom, an alkyl group, an aryl group, or a heteroaryl group.)

Since the ortho substituent $R^4$ of the aryl ring or heteroaryl ring represented by Ar is oriented toward the perylene ring and effectively shields the $\pi$ plane, a high quantum yield can be exhibited.

Ar represents an aryl ring or heteroaryl ring which optionally has a substituent, and examples of the aryl ring can include a benzene ring, naphthalene ring, an azulene ring, an anthracene ring, a phenanthrene ring, a naphthacene ring, a pyrene ring, and the like.

The heteroaryl ring can include a pyridine ring, a pyrimidine ring, a furan ring, a pyrrole ring, an imidazole ring, a benzimidazole ring, a pyrazole ring, a pyrazine ring, a triazole ring, a pyrazolotriazole ring, an oxazole ring, a benzoxazole ring, a thiazole ring, a thiophene ring, a quinoline ring, a benzofuran ring, a dibenzofuran ring, an indole ring, a quinoxaline ring, a triazine ring, and the like.

Ar preferably represents an aryl ring.

$R^4$ represents a substituent other than a phenyl group, and any group can be selected from the substituents which * optionally has in general formula (A1) except for a phenyl group.

The alkyl group, aryl group, and heteroaryl group represented by R' have the same meanings as the alkyl group, aryl group, and heteroaryl group listed as substituents which * optionally has in general formula (A1), respectively.

$R^4$ is preferably an alkyl group (for example, a methyl group, an ethyl group, a propyl group, a butyl group, a pentyl group, a hexyl group, an isopropyl group, a tert-butyl group, an isobutyl group, or a neopentyl group), a cycloalkyl group (for example, a cyclopentyl group or a cyclohexyl group), an aryl group except for a phenyl group (for example, a naphthyl group or an anthryl group), a heteroaryl group (for example, a pyridyl group or a carbazolyl group), an alkenyl group (for example, a butenyl group, a pentenyl group, or a hexenyl group), an alkynyl group (for example, a propynyl group, a hexynyl group, a phenylethynyl group, or a trimethylsilylethynyl group), a silyl group (for example, a trimethylsilyl group, a triethylsilyl group, or a triphenylsilyl group), an alkoxy group (a methoxy group or a tert-butyloxy group), or an aryloxy group (a phenoxy group or a naphthoxy group).

[Imide derivative having a structure represented by general formula (B3-1) to general formula (B3-4)]

The imide derivative having a structure represented by general formula (B1) preferably has a structure represented by general formula (B3-1) to general formula (B3-4) below.

[Formula 10]

General formula (B3-1)

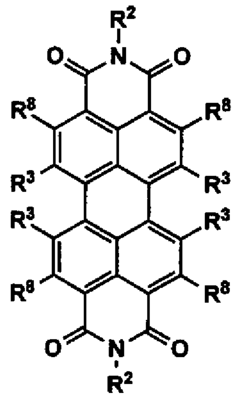

General formula (B3-2)

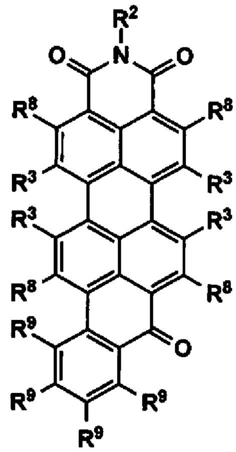

General formula (B3-3)

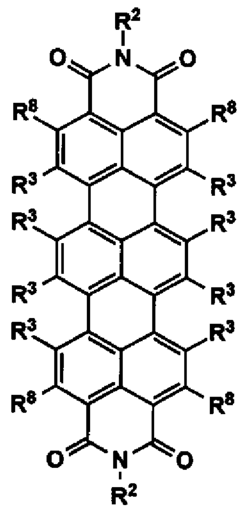

General formula (B3-4)

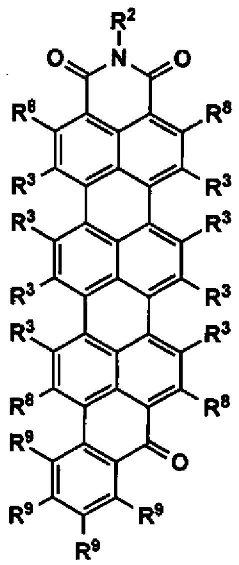

(In the formulae, $R^2$ each independently represents a substituted or unsubstituted alkyl group, aryl group, or heteroaryl group. A plurality of $R^3$ each independently represent a hydrogen atom or a group having a structure represented by general formula (B2) above, and at least one $R^3$ represents a group having a structure represented by general formula (B2) above. $R^8$ and $R^9$ each independently represent a hydrogen atom, an alkyl group, an alkenyl group, an alkynyl group, an aryl group, a heteroaryl group, an alkoxy group, or an aryloxy group.)

$R^2$ and $R^3$ have the same meanings as $R^2$ and $R^3$ in general formula (B1), respectively.

The alkyl group, alkenyl group, alkynyl group, aryl group, heteroaryl group, alkoxy group, and aryloxy group represented by $R^8$ or $R^9$ have the same meanings as the alkyl group, alkenyl group, alkynyl group, aryl group, heteroaryl group, alkoxy group, and aryloxy group listed as substituents which * optionally has in general formula (A1), respectively.

[Imide derivative having a structure represented by general formula (B4)]

The imide derivative having a structure represented by general formula (B3-1) above preferably has a structure represented by general formula (B4) below.

[Formula 11]

General formula (B4)

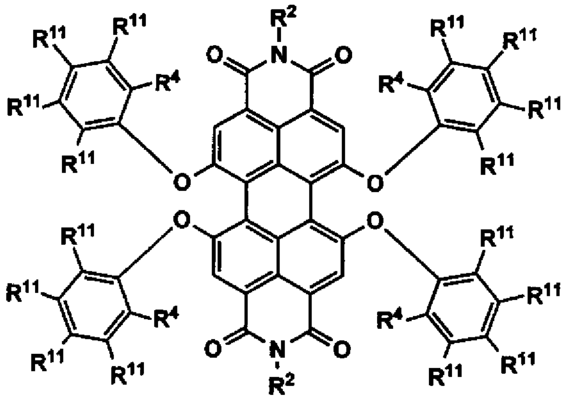

(In the formula, a plurality of $R^2$ each independently represents a substituted or unsubstituted alkyl group, aryl group, or heteroaryl group. Each $R^4$ represents a substituent other than a phenyl group. $R^4$ are optionally coupled to each other. $R^{11}$ each independently represents a hydrogen atom, an alkyl group, an aryl group, a heteroaryl group, an alkenyl group, an alkynyl group, an alkoxy group, an aryloxy group, an amino group, an acyl group, an acyloxy group, an amide group, a carboxy group, or a sulfo group.)

The case where all of the four bay areas are phenoxy groups is desirable because the substituents $R^4$ is each oriented upward or downward from the perylene ring, and shielding effect is enhanced.

$R^2$ and $R^4$ have the same meanings as $R^2$ and $R^4$ in general formula (B1), respectively.

Further, in general formula (B4) above, it is desirable that any two $R^4$ are coupled to each other across perylene. The coupling effectively inhibits interaction between perylene rings, and a higher light emission quantum yield is exhibited.

Furthermore, the light-emitting colorant of the present invention is preferably a light-emitting colorant-containing particle colorant with an AlogP value in a range of 10 to 60, more preferably in a range of 15.5 to 45.0.

The AlogP value is Ghose-Crippen-Viswanadhan octanol-water partition coefficient and is a predicted value of a logP value. The logP value is a dimensionless number index defining hydrophobicity of a compound and is usually represented by an octanol/water partition coefficient using n-octanol and water. The larger the value is, the higher the hydrophobicity is. The AlogP value in the present specification was calculated by using the method described in Non Patent Literature 1 (Ghose, Arup K., Vellarkad N. Viswanadhan, and John J. Wendoloski, The Journal of Physical Chemistry A 1998, 102, 3762.) using calculation software CANVAS from Schrodinger, Inc.

With an AlogP value of less than 10, the colorant is hydrophilic, and the colorant once introduced into the organic resin escapes into water; therefore, the colorant content in the light-emitting colorant-containing particle reduces, and fluorescent light emission luminance becomes insufficient. With an AlogP value of 10 or more, the colorant has a relatively high hydrophobicity, and thus the colorant once introduced into the organic resin is prevented from escaping into water. Meanwhile, with an AlogP value exceeding 60, the colorant has a too high hydrophobicity, and thus the types of organic solvents for dissolution are extremely limited, the colorant may not be mixed with the organic resin containing the colorant, and may not be incorporated into a particle. With an AlogP value of 60 or less, the types of organic solvents are prevented from being extremely limited, and the colorant is prevented from not being mixed with the organic resin and not being incorporated into a particle.

The light-emitting colorant of the present invention preferably has a free volume ratio in a range of 10 to 70%, more preferably in a range of 15 to 60%. The free volume ratio represents a ratio of a volume remaining after subtracting, from the volume per unit mass which the molecule itself has at a constant temperature and pressure, a volume occupied by the molecule. When the free volume ratio is less than 10%, since the steric structure of the light-emitting colorant is planar, the light-emitting colorant is likely to aggregate in a particle, and concentration quenching is likely to occur. When the free volume ratio is 70% or more, the volume occupied by one light-emitting colorant molecular is too large, and the light-emitting colorant amount that can be contained in a particle decreases. The free volume ratio in the present specification was obtained by calculating an occupancy volume occupied by a molecular with respect to a unit volume as a free volume ratio using Materials Science (Suite) from Schrodinger, Inc.

In addition, a desired wavelength can be selected as a light emission wavelength of the light-emitting colorant according to application. For example, in a case where application for carrying out immunostaining using the light-emitting colorant simultaneous with staining for morphology observation using eosin or the like in pathological diagnosis is assumed, the light emission wavelength of the light-emitting colorant is preferably set to red to near-infrared so that light

emission from the light-emitting colorant can be visually observed, and the light emission wavelength of eosin, which emits fluorescent light, does not overlap therewith. For example, a light-emitting colorant having a maximum excitation wavelength in a range of 555 to 620 nm and a maximum light emission wavelength in a range of 580 to 770 nm is preferable.

(Illustrative compounds)

Specific examples of the light-emitting colorant which can be used in the present invention are as follows. However, the present invention is not limited to embodiments using these light-emitting colorants.

[Formula 12]

| No. | Light-emitting colorant | | | |
|---|---|---|---|---|
| | Structure | **AlogP** | Free volume ratio [%] | Molecular weight |
| **1** | 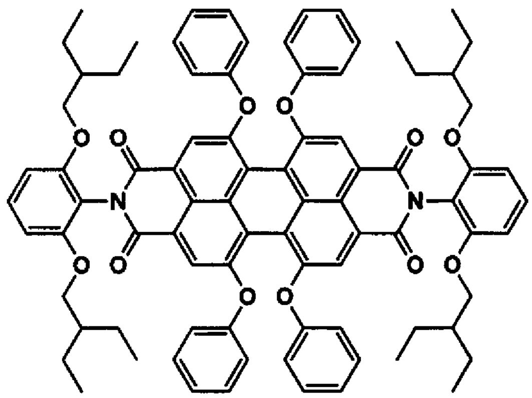 | **21.49** | **35.85** | **1311.58** |
| **2** | 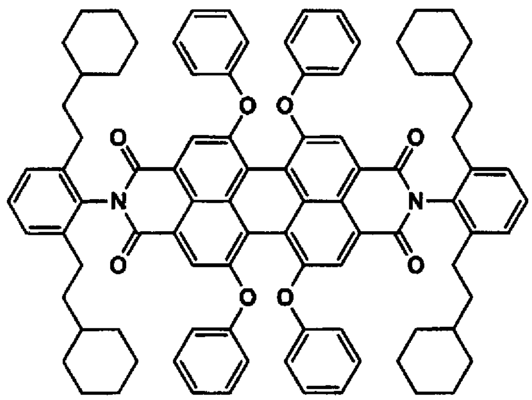 | **25.55** | **38.90** | **1351.70** |

(continued)

| No. | Light-emitting colorant | | | |
|---|---|---|---|---|
| | Structure | AlogP | Free volume ratio [%] | Molecular weight |
| 3 | 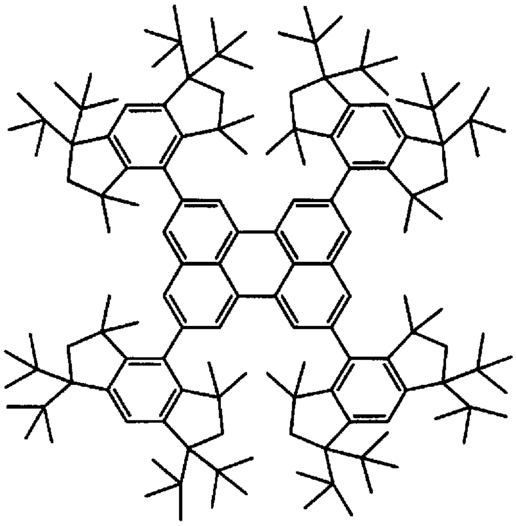 | 41.34 | 40.68 | 1999.40 |

[Formula 13]

| No. | Light-emitting colorant | | | |
|---|---|---|---|---|
| | Structure | AlogP | Free volume ratio [%] | Molecular weight |
| 4 | 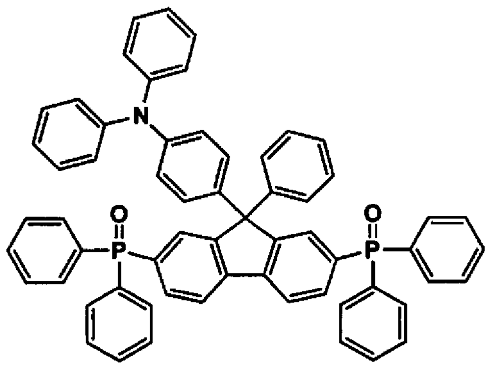 | 13.84 | 58.66 | 886.00 |
| 5 | 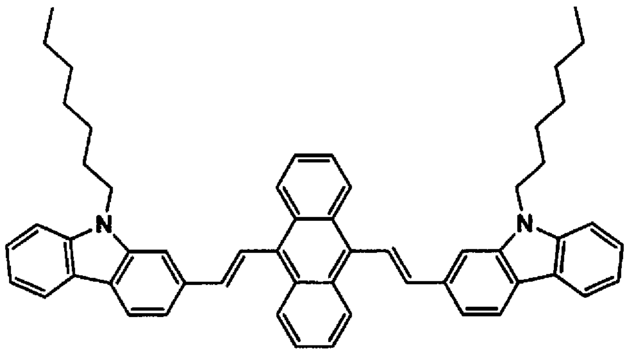 | 16.23 | 56.30 | 757.10 |

(continued)

| No. | Light-emitting colorant | | | |
|---|---|---|---|---|
| | Structure | AlogP | Free volume ratio [%] | Molecular weight |
| **6** | 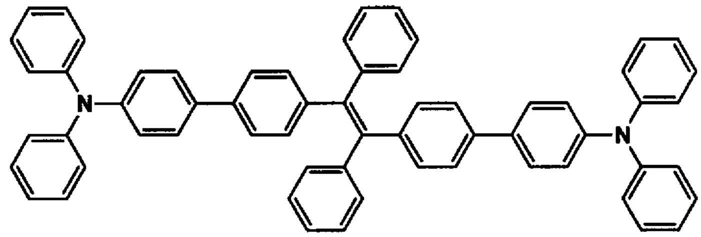 | **16.48** | **40.62** | **819.10** |
| **7** | 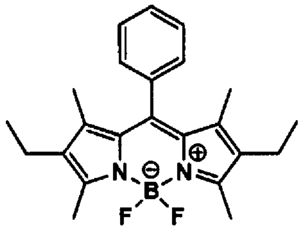 | **5.71** | **30.59** | **380.30** |

[Formula 14]

| No. | Light-emitting colorant | | | |
|---|---|---|---|---|
| | Structure | AlogP | Free volume ratio [%] | Molecular weight |
| **8** | 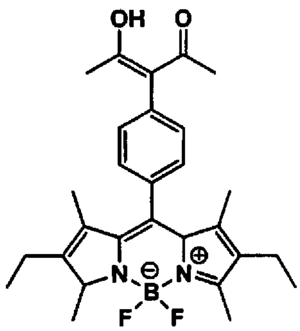 | **7.53** | **29.24** | **478.40** |
| **9** | 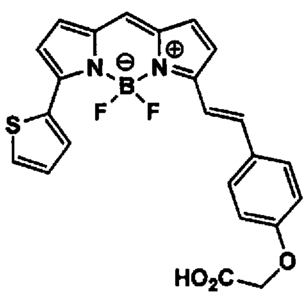 | **4.10** | **36.79** | **450.30** |
| **10** | 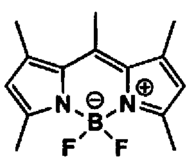 | **2.73** | **2.16** | **262.10** |

(continued)

| No. | Light-emitting colorant | | | |
|---|---|---|---|---|
| | Structure | AlogP | Free volume ratio [%] | Molecular weight |
| 11 | 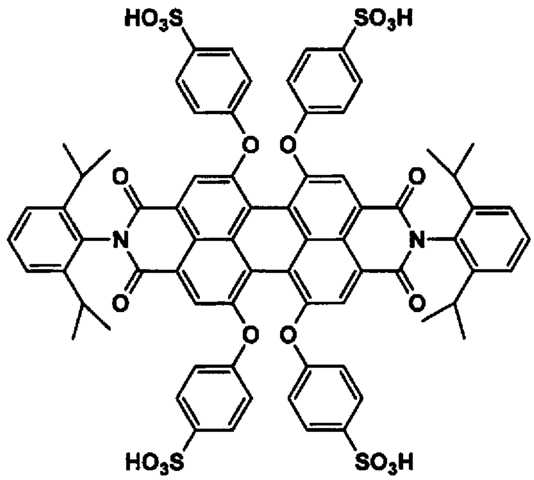 | 15.14 | 32.98 | 1399.49 |

[Formula 15]

| No. | Light-emitting colorant | | | |
|---|---|---|---|---|
| | Structure | AlogP | Free volume ratio [%] | Molecular weight |
| 12 | 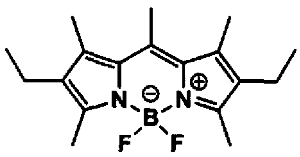 | 4.68 | 11.04 | 318.20 |
| 13 | 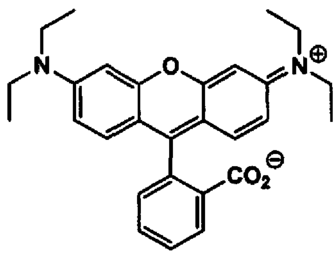 | 4.72 | 42.38 | 407.37 |
| 14 | 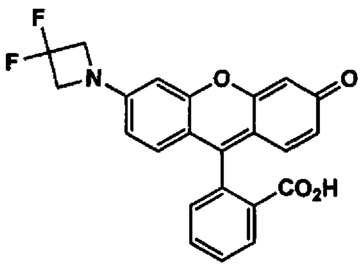 | 4.85 | 41.48 | 443.57 |

(continued)

| No. | Light-emitting colorant | | | |
|---|---|---|---|---|
| | Structure | AlogP | Free volume ratio [%] | Molecular weight |
| 15 | 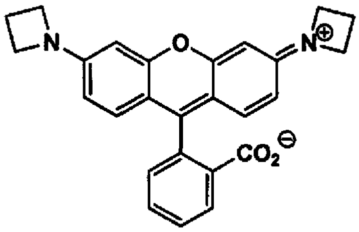 | 2.41 | 31.75 | 410.47 |
| 16 | 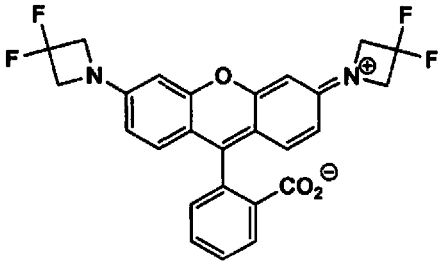 | 3.27 | 48.25 | 482.43 |
| 17 | 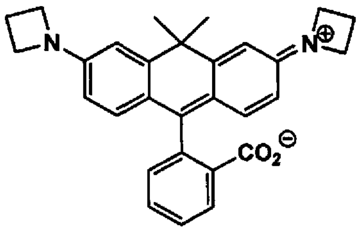 | 2.08 | 34.07 | 436.56 |

[Formula 16]

| No. | Light-emitting colorant | | | |
|---|---|---|---|---|
| | Structure | AlogP | Free volume ratio [%] | Molecular weight |
| 18 | 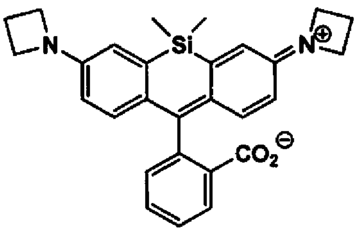 | 2.64 | 38.07 | 452.63 |
| 19 | 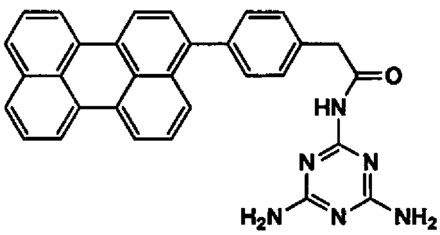 | 5.38 | 47.76 | 494.56 |

(continued)

| No. | Light-emitting colorant | | | |
|---|---|---|---|---|
| | Structure | AlogP | Free volume ratio [%] | Molecular weight |
| 20 | 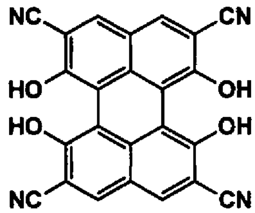 | 3.30 | 1.28 | 416.35 |
| 21 | 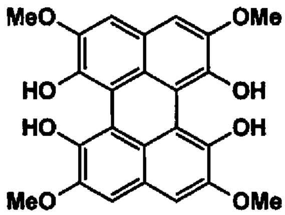 | 3.72 | 3.30 | 436.42 |
| 22 | 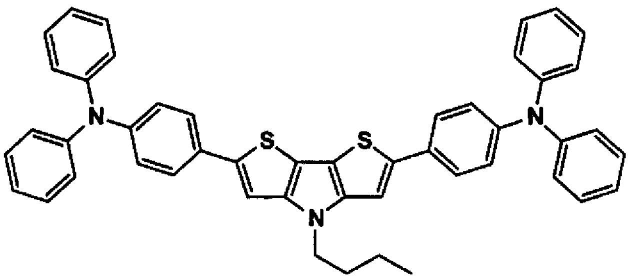 | 14.78 | 41.84 | 721.98 |
| 23 | 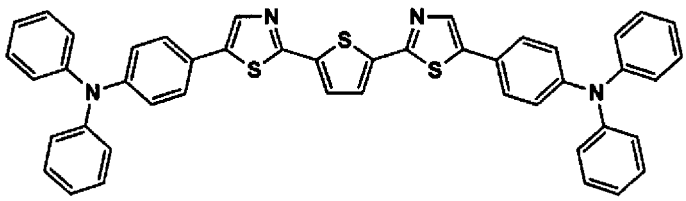 | 12.94 | 50.97 | 736.97 |

[Formula 17]

| No. | Light-emitting colorant | | | |
|---|---|---|---|---|
| | Structure | AlogP | Free volume ratio [%] | Molecular weight |
| 24 | 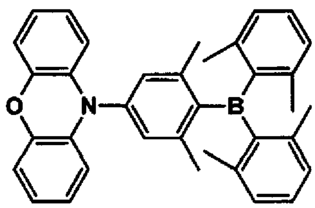 | 12.04 | 27.52 | 507.48 |

(continued)

| No. | Light-emitting colorant | | | |
|---|---|---|---|---|
| | Structure | **AlogP** | Free volume ratio [%] | Molecular weight |
| **25** | 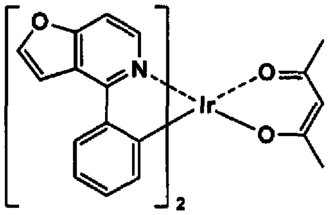 | **5.32** | **39.31** | **680.13** |
| **26** | 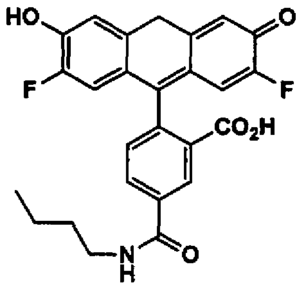 | **4.08** | **34.26** | **465.45** |
| **27** | 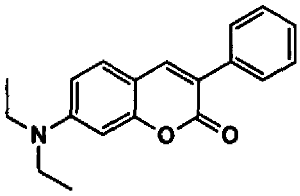 | **4.39** | **36.21** | **293.14** |
| **28** | 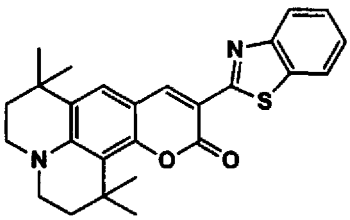 | **6.12** | **32.28** | **430.57** |
| **29** | 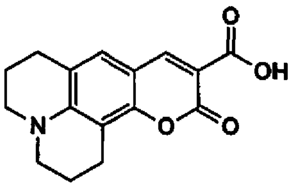 | **2.84** | **15.25** | **285.30** |

[Formula 18]

| No. | Light-emitting colorant | | | |
|---|---|---|---|---|
| | Structure | AlogP | Free volume ratio [%] | Molecular weight |
| 30 | 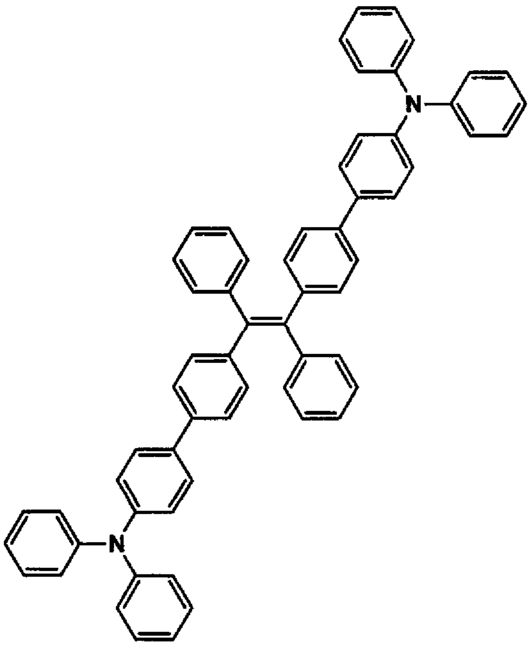 | 16.48 | 29.47 | 819.06 |
| 31 | 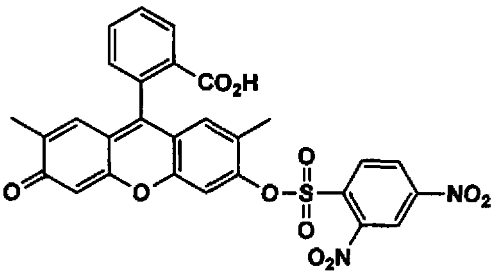 | 6.28 | 51.24 | 590.52 |
| 32 | 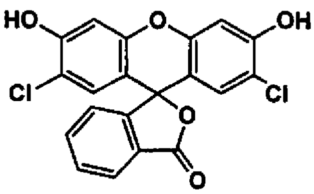 | 5.02 | 41.02 | 471.33 |
| 33 | 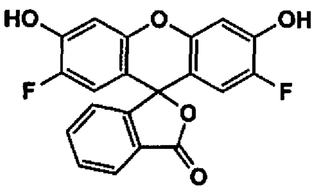 | 4.10 | 37.51 | 368.29 |

[Formula 19]

| No. | Light-emitting colorant | | | |
|---|---|---|---|---|
| | Structure | AlogP | Free volume ratio [%] | Molecular weight |
| **34** | 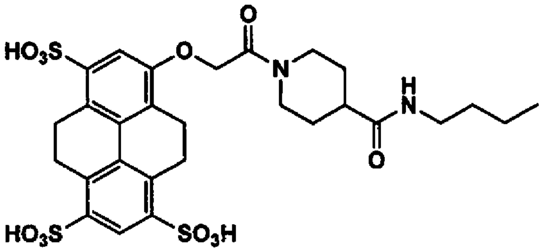 | **2.73** | **42.46** | **686.76** |
| **35** | 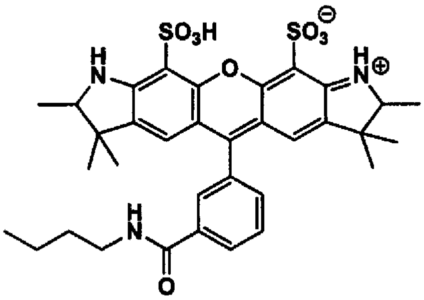 | **3.71** | **39.98** | **681.82** |
| **36** | 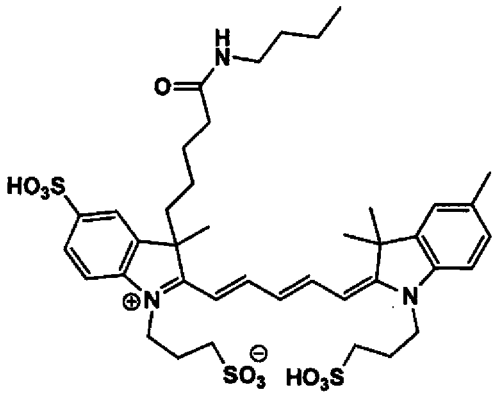 | **4.06** | **47.54** | **834.07** |
| **37** | 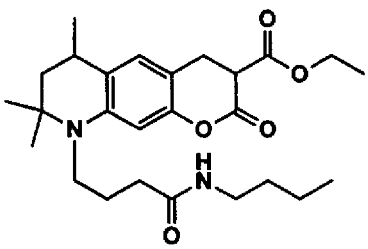 | **4.70** | **46.78** | **456.58** |

[Formula 20]

| No. | Light-emitting colorant | | | |
|---|---|---|---|---|
| | Structure | **AlogP** | Free volume ratio [%] | Molecular weight |
| **38** | 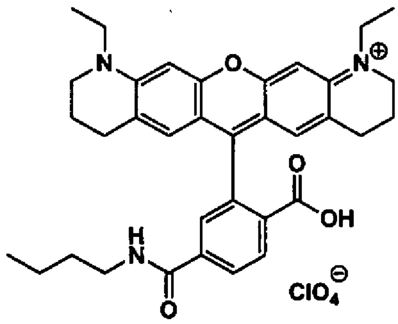 | **4.86** | **35.74** | **666.17** |
| **39** | 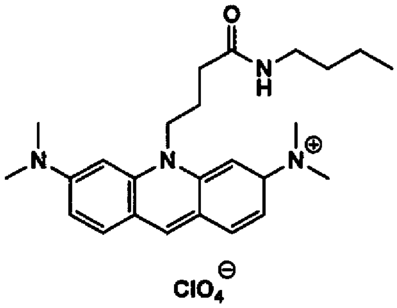 | **3.36** | **31.46** | **407.58** |
| **40** | 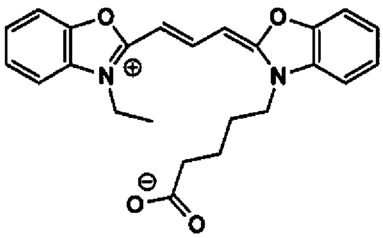 | **6.00** | **33.47** | **446.57** |
| **41** | 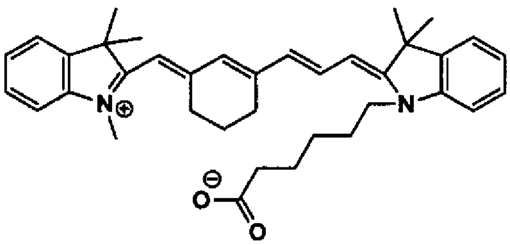 | **6.31** | **38.57** | **548.77** |
| **42** | 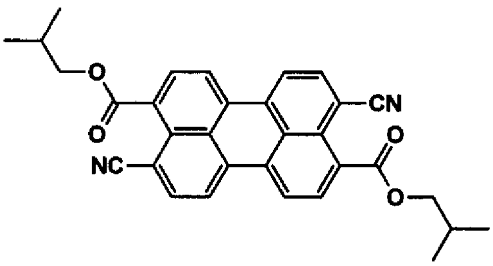 | **6.71** | **28.44** | **502.19** |

[Formula 21]

| No. | Light-emitting colorant | | | |
|---|---|---|---|---|
| | Structure | AlogP | Free volume ratio [%] | Molecular weight |
| 43 | 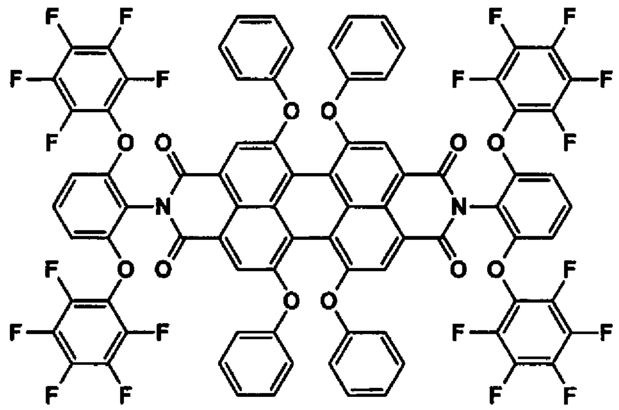 | 23.49 | 34.03 | 1639.13 |
| 44 | 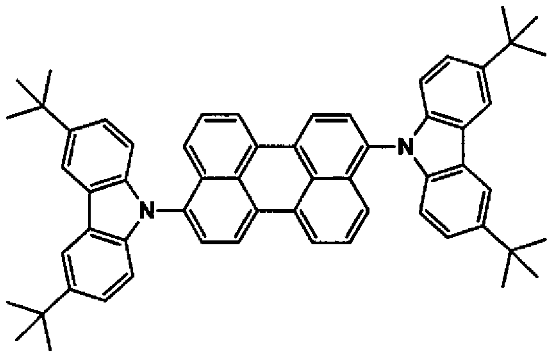 | 16.83 | 44.81 | 807.14 |
| 45 | 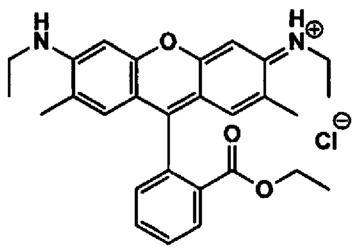 | 5.04 | 35.65 | 479.02 |

[Formula 22]

| No. | Light-emitting colorant | | | |
|---|---|---|---|---|
| | Structure | AlogP | Free volume ratio [%] | Molecular weight |
| **46** | 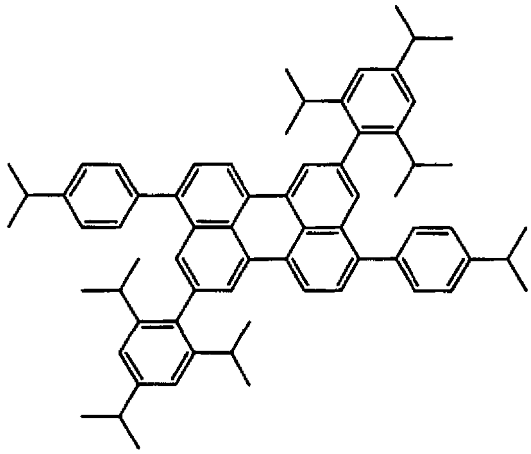 | **20.48** | **43.47** | **893.36** |
| **47** | 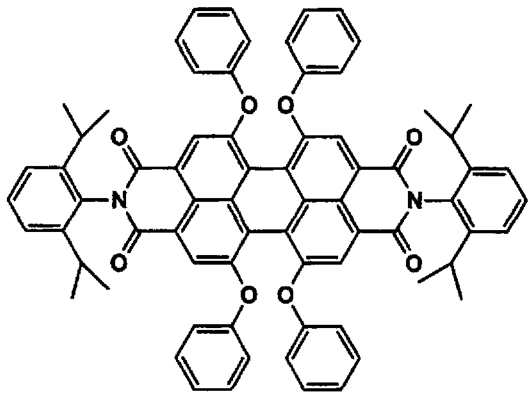 | **17.91** | **38.03** | **1079.26** |
| **48** | 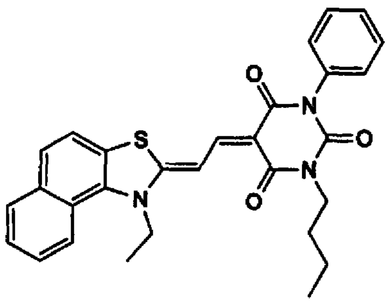 | **6.70** | **42.41** | **497.61** |

[Formula 23]

| No. | Light-emitting colorant | | | |
|---|---|---|---|---|
| | Structure | AlogP | Free volume ratio [%] | Molecular weight |
| 49 | 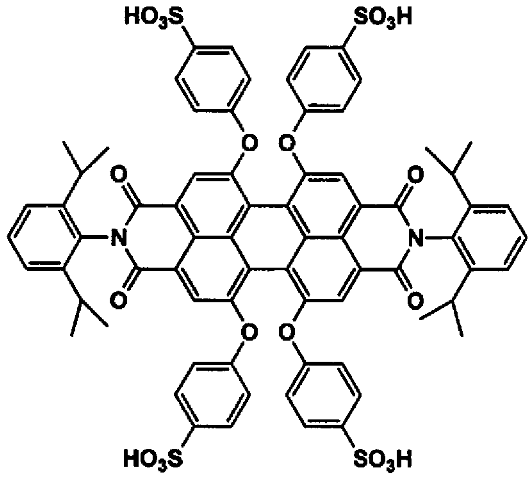 | 15.14 | 32.98 | 1399.49 |
| 50 | 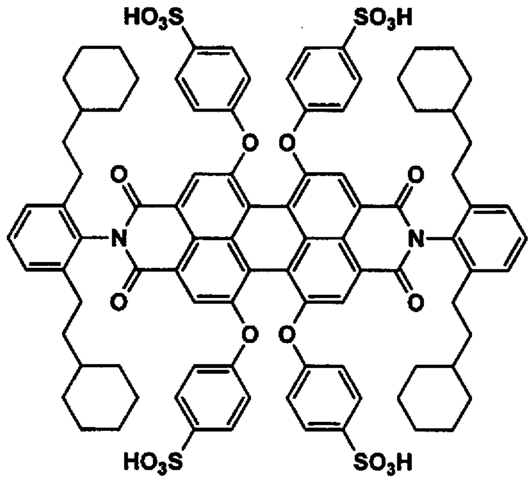 | 22.78 | 28.60 | 1671.97 |
| 51 | 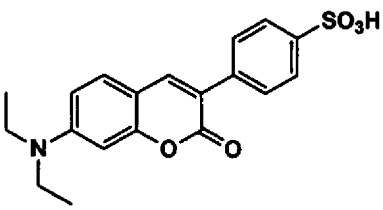 | 3.70 | 36.97 | 373.42 |
| 52 | 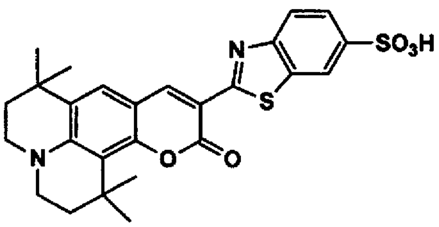 | 5.42 | 38.03 | 510.62 |

[Formula 24]

| No. | Light-emitting colorant | | | |
|---|---|---|---|---|
| | Structure | AlogP | Free volume ratio [%] | Molecular weight |
| 53 | 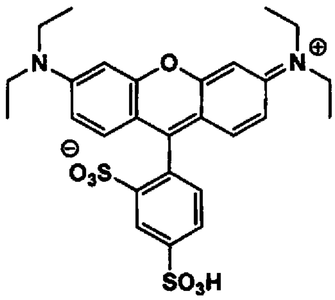 | 3.05 | 48.88 | 558.66 |
| 54 | 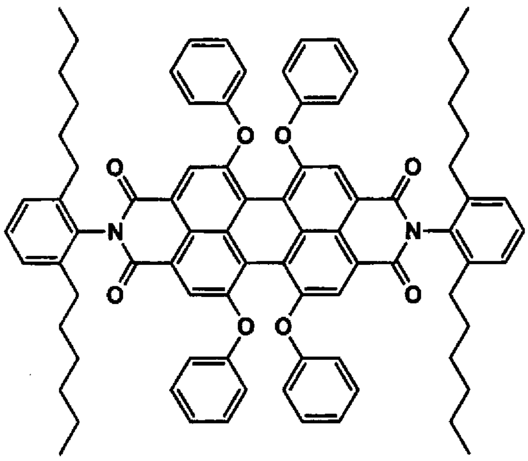 | 24.21 | 37.81 | 1247.56 |
| 55 | 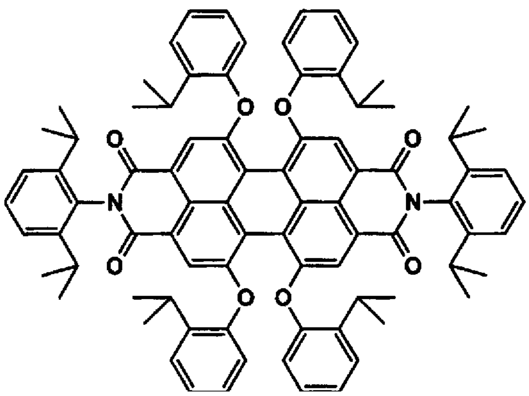 | 22.69 | 48.35 | 1247.56 |

[Formula 25]

| No. | Light-emitting colorant | | | |
|---|---|---|---|---|
| | Structure | **AlogP** | Free volume ratio [%] | Molecular weight |
| **56** | 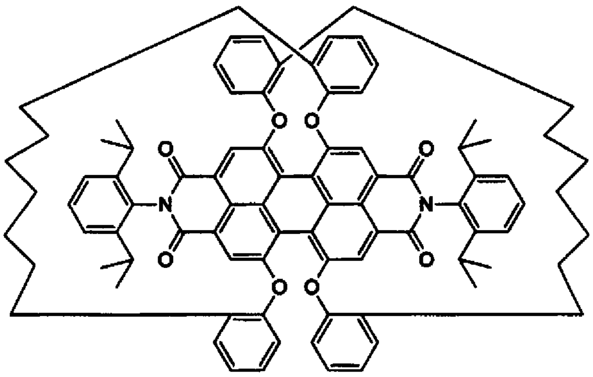 | **24.589** | **48.59** | **1299.63** |
| **57** | 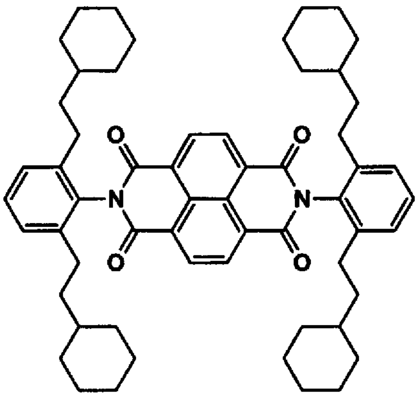 | **17.194** | **44.43** | **859.19** |
| **58** | 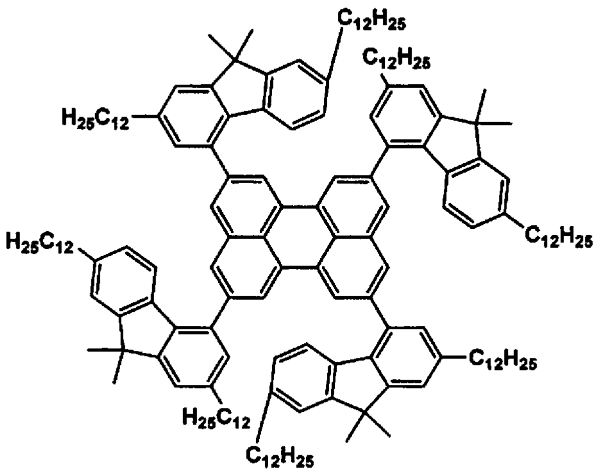 | **63.45** | **66.21** | **2367.88** |

It has been found that luminance especially increases when a light-emitting colorant in which a maximum fluorescent light emission wavelength measured at 25°C and at a concentration at which a maximum value of absorbance of the light-emitting colorant-containing particle in an aqueous solution becomes 1.0 is at least 5 nm longer than a maximum fluorescent light emission wavelength measured at 25°C and at a concentration at which a maximum value of absorbance of the light-emitting colorant alone in methanol or ethanol becomes 1.0 is used as the light-emitting colorant according to the present invention.

While the development mechanism and working mechanism of the effect of the present invention have not been clear, it is inferred as follows. The colorant weakly interacts with the organic resin (for example, via Van deer Waals force or the like), and the hydrophobic colorant once incorporated into the organic resin, especially into a hydrophilic organic resin maintains stable interaction with the organic resin in an aqueous solution. Between methanol and ethanol, one providing a higher solubility for the light-emitting colorant can be selected.

The light-emitting colorant particle of the present invention may adsorb to the organic resin via weak interaction, or the organic resin and the light-emitting colorant may bind to each other via a covalent bond.
In the present invention, it is preferable that interaction between the organic resin and the colorant is stronger than intermolecular interaction between colorants.
The state of existence of the organic resin and the colorant in a particle is preferably a state in which the colorant is uniformly dispersed in the organic resin throughout the particle. Concentration quenching is likely to occur when the colorant is localized.

<Method for producing light-emitting colorant-containing particle>

The light-emitting colorant-containing particle of the present invention can be produced according to a known polymerization step (1) for various organic resins using a light-emitting colorant satisfying specific conditions. In addition, an organism-related binding substance may be further coupled, by a modification step (2), to the light-emitting colorant-containing particle obtained by such a method.
The light-emitting colorant-containing particle using a thermosetting resin can be basically produced according to an emulsion polymerization method but is preferably produced by a polymerization step using a surfactant and a polymerization reaction accelerator as shown below. In a light-emitting colorant-containing particle obtained by such a production method, a large part of the light-emitting colorant, desirably substantially the whole of the light-emitting colorant is fixed in a state of being contained in a resin particle. However, the case where a part of the light-emitting colorant is fixed in a state of binding or attaching to a surface of a resin particle is not excluded. In addition, by what chemical or physical action the light-emitting colorant is fixed to a resin particle in the state where the light-emitting colorant is contained is not limited. In the present invention, a derivatization step for covalently binding resin raw material and the light-emitting colorant in advance or for introducing an actively charged substituent into resin raw material is not needed to be provided prior to the polymerization step (a light-emitting colorant-containing particle excellent in light emission intensity and light resistance is obtained without using such a step). However, the case where such a step is used in combination is not excluded.

(1) Polymerization step

The polymerization step is a step of heating a reaction mixture containing a light-emitting colorant and resin raw material (monomer or oligomer, or prepolymer), preferably further containing a surfactant and a polymerization reaction accelerator to progress polymerization reaction of resin and producing a resin particle containing the light-emitting colorant.
The order of addition of each component contained in the reaction mixture is not particularly limited. An order in which a surfactant is added to an aqueous solution of a light-emitting colorant, resin raw material is subsequently added, and a polymerization reaction accelerator is finally added is typically used. Alternatively, an order in which resin raw material is added to an aqueous solution of a surfactant, a polymerization reaction accelerator is subsequently added, and while synthesis reaction of a resin particle is progressed, an aqueous solution of a light-emitting colorant is added may be used. The concentration of the aqueous solution of the certain light-emitting colorant according to the present invention used in such a polymerization step can be adjusted within a range (for example, 250 to 450 $\mu$M) relatively higher than the concentration of an aqueous solution of a conventional light-emitting colorant.
Conditions (temperature, time, and the like) for polymerization reaction can be appropriately set, concerning the type of resin, composition of a raw material mixture, and the like.
The polymerization method is not particularly limited as long as it is a known polymerization method. Examples of the known polymerization method include bulk polymerization, emulsion polymerization, soap-free emulsion polymerization, seeded polymerization, suspension polymerization, and the like. In a case of bulk polymerization, a resin particle with a desired particle diameter can be obtained by pulverization and subsequent classification. Emulsion polymerization is a polymerization method in which a medium such as water is mixed with a monomer difficult to dissolve in the medium and an emulsifier (surfactant), and a polymerization initiator capable of dissolving in the medium is added thereto. It is characterized in that variation in particle diameters obtained is small. Soap-free emulsion polymerization is emulsion polymerization using no emulsifier. It is characterized in that particles with a uniform particle diameter are obtained. Seeded polymerization is polymerization carried out with a separately prepared seed (seed) particle added at the time of initiating polymerization. It is characterized in that polymerization is carried out, with a particle diameter, particle diameter distribution, and amount (number) arbitrarily set as a seed particle, and polymerization can be consequently carried out targeting a desired particle diameter and particle diameter distribution. Suspension polymerization is polymerization method carried out by mechanically stirring a monomer and solvent water to suspend them. It is characterized in that a well-regulated particle with a small particle diameter can be obtained.
Giving synthesis of a thermosetting resin such as a melamine resin as a specific example, the reaction temperature is usually 70 to 200°C, and the reaction time is usually 20 to 120 minutes. It is appropriate that the reaction temperature is a temperature not deteriorating performance of the light-emitting colorant (within the range of heat resistant temperatures). Heating may be carried out in multiple stages. For example, reaction may be carried out at a relatively low temperature for a certain time, and the temperature is then increased to carry out reaction at a relatively drop temperature for a certain time.

After the completion of polymerization reaction, impurities such as excess of resin raw material, light-emitting colorant, surfactant, and the like may be removed from the reaction liquid, and the produced light-emitting colorant-containing particle may be collected followed by purification. For example, after the reaction liquid is centrifuged, and the supernatant containing impurities is removed, ultrapure water is added thereto followed by ultrasonic irradiation for redispersion and washing. These operations are preferably carried out repeatedly several times until extinction and fluorescence originating from the resin and light-emitting colorant disappear from the supernatant.

(Surfactant)

A known emulsifier for emulsion polymerization can be used as the surfactant. The surfactant includes an anionic (negative ion-based), nonionic (non-ionic), and cationic (positive ion-based) surfactants. In a case where a (cationic) thermosetting resin having a positively-charged substituent or portion is synthesized, an anionic or nonionic surfactant is preferably used. Conversely, in a case where an (anionic) thermosetting resin having a negatively-charged substituent or portion is synthesized, a cationic or nonionic surfactant is preferably used.

Examples of the anionic surfactant include sodium dodecylbenzenesulfonate (product name: "NEOPELEX" series, Kao Corporation). Examples of the nonionic surfactant include a polyoxyethylenealkylether-based (product name: "EMULGEN" series, Kao Corporation) compound, polyvinylpyrrolidone (PVP), and polyvinylalcohol (PVA). Examples of the cationic surfactant include dodecyltrimethylammonium bromide.

By virtue of adjusting an additive amount of the surfactant, the particle diameter of the resin particle can be adjusted, and a light-emitting colorant-containing particle with a small variation coefficient of particle diameters, that is, uniform particle sizes can be produced. An additive amount of the surfactant is a portion of 10 to 60% by mass based on resin raw material, or 0.1 to 3.0% by mass based on the total of a raw material mixture, for example. As the additive amount of the surfactant is increased, the particle diameter tends to decrease. Conversely, as the additive amount of the surfactant is decreased, the particle diameter tends to increase.

(Polymerization reaction accelerator)

The polymerization reaction accelerator has a function of facilitating electrostatic interaction by accelerating polycondensation reaction of a thermosetting resin such as a melamine resin and imparting a proton (H+) to a functional group such as an amino group contained in the resin or light-emitting colorant to charge the functional group. Reaction of the thermosetting resin progresses only by heating but progresses at a lower temperature when the polymerization reaction accelerator is added. Therefore, the polymerization reaction accelerator can be added to the extent that reaction or performance can be controlled. Examples of such a polymerization reaction accelerator include acids such as formic acid, acetic acid, sulfuric acid, paratoluenesulfonic acid, and dodecylbenzenesulfonic acid. When the light-emitting colorant is a compound having a carboxy group or a sulfo group, the light-emitting colorant can also donate a proton similarly to the above-described acids.

(2) Modification step

The modification step carried out as needed basis is a step for coupling an organism-related binding substance or the like to a surface of the light-emitting colorant-containing particle according to application of the light-emitting colorant-containing particle.

In the technical field to which the present invention relates, various methods for coupling an organism-related binding substance or the like to a fluorescent labeling body are known, and such methods can be used also in the present invention.

For example, by utilizing reaction occurring between reactive functional groups such as a carboxy group, amino group, aldehyde group, thiol group, and maleimide group, a fluorescent labeling body (one reactive functional group present on the surface thereof) and an organism-related binding substance (the other reactive functional group present within its molecule) can be bound to each other. In addition, in a case where functional groups which the fluorescent labeling body and the organism-related binding substance have cannot directly bind to each other, it is also possible that these functional groups are bound to each other via a "linker molecule" which has predetermined functional groups respectively on both ends of the molecule. Such reaction can be carried out by adding required reagents and allowing a predetermined time to lapse.

Specific examples include a method in which a silane coupling agent (for example, aminopropyltrimethoxysilane) is reacted against a light-emitting colorant-containing particle having a hydroxy group on the surface thereof to introduce an amino group, a thiol group-introducing reagent (for example, N-succinimidyl S-acetylthioacetate) is reacted against streptavidin to introduce a thiol group at the same time, and a PEG (polyethylene glycol)-based linker molecule having, on both ends, maleimide groups reactive with both of an amino group and thiol group is finally reacted to couple the light-emitting colorant-containing particle to streptavidin.

In addition, when a resin (acrylic resin) is synthesized using glycidyl methacrylate as a raw material monomer, for example, an epoxy group originating from the monomer appears on the surface of the light-emitting colorant-containing particle. This epoxy group can be converted to an amino group by adding ammonia water to this light-emitting colorant-containing particle, and a desired organism-related binding substance or the like can be further coupled to the amino group.

An average particle diameter of the light-emitting colorant-containing particle in the present invention is 1 to 100 nm and preferably 30 to 100 nm.

The average particle diameter of a light-emitting colorant-containing particle produced can be measured by a method known in this field. Specifically, an electron micrograph is taken at an appropriate magnification using a scanning electron microscope (SEM), a cross-sectional area of the light-emitting colorant-containing particle is measured, and the average particle diameter can be measured as a diameter (circular area-equivalent diameter) of a circle having an area equivalent to the measured value. With respect to the average particle size (average particle diameter) and variation coefficient of a group of the light-emitting colorant-containing particle, after particle sizes (particle diameters) are measured for a sufficient number of (for example, 1000) light-emitting colorant-containing particles in the manner described above, the average particle diameter is calculated as an arithmetic average thereof, and the variation coefficient is calculated by an equation: 100 × standard deviation of particle diameters/average particle diameter.

In the present invention, the variation coefficient indicating variation in particle diameters is not particularly limited but is usually 20% or less and preferably 5 to 15%.

In the present invention, luminance is represented by the following formula.

$$\text{Luminance} = \text{molar extinction coefficient } (\varepsilon) \times \text{quantum yield} \times 1/1000$$

<Application of light-emitting colorant-containing particle>

[Labeling agent for pathological diagnosis]

The labeling agent for pathological diagnosis of the present invention is characterized by using the light-emitting colorant-containing particle of the present invention.

While application of the light-emitting colorant-containing particle of the present invention is not particularly limited, application as a labeling agent for pathological diagnosis for labeling a substance to be detected contained in a sample (tissue slice) so as to enable fluorescence observation in immunostaining is typically exemplified. That is, it is preferable that the light-emitting colorant-containing particle of the present invention as described above is used as a conjugated body (conjugate) by coupling an organism-related binding substance appropriate to a mode for carrying out immunostaining.

While the substance to be detected is not particularly limited, an antigen appropriate to its purpose is usually selected in pathological diagnosis. For example, HER2 can be selected as the substance to be detected in pathological diagnosis relating to breast cancer. In addition, the substance to be detected may be a substance which is not specific to an organism. For example, the substance to be detected may be a pharmaceutical.

As a first example of the organism-related binding substance, an antibody (primary antibody) specifically binding to the substance to be detected is exemplified. A conjugated body of the light-emitting colorant-containing particle and primary antibody can directly bind to the substance to be detected and fluorescently label it (primary antibody method).

As a second example of the organism-related binding substance, an antibody (secondary antibody) binding to an antibody (primary antibody) specifically binding to the substance to be detected is exemplified. For example, in a case where the primary antibody is an antibody (IgG) produced from a rabbit, the secondary antibody is an anti-rabbit IgG antibody. A conjugated body of the light-emitting colorant-containing particle and secondary antibody binds to a primary antibody binding to the substance to be detected; consequently, the substance to be detected can be fluorescently labeled in an indirect manner (secondary antibody method).

As a third example of the organism-related binding substance, avidin, streptavidin, or biotin is exemplified. In this case, a secondary antibody is conjugated with a substance capable of binding to a substance having been conjugated with the light-emitting colorant-containing particle. For example, when a conjugated body of the light-emitting colorant-containing particle and avidin or streptavidin is used, a conjugated body of a secondary antibody and biotin is used in combination. The conjugated body of a secondary antibody and biotin binds to the primary antibody binding to the

substance to be detected, and the conjugated body of the light-emitting colorant-containing particle and avidin or streptavidin further binds to said conjugated body; consequently, the substance to be detected can be fluorescently labeled in an indirect manner (biotin-avidin method or sandwich method). Contrary to this, a conjugated body of the light-emitting colorant-containing particle and biotin can also be used in combination with a conjugated body of a secondary antibody and avidin or streptavidin.

The primary antibody may be selected according to the selected substance to be detected, and one capable of specifically binding to the selected substance to be detected may be selected. For example, in a case where the substance to be detected is HER2, an anti-HER2 monoclonal antibody can be used as the primary antibody. Such a primary antibody (monoclonal antibody) can be produced by a general method with an immune animal such as a mouse, rabbit, bovine, goat, sheep, canis, or chicken.

The secondary antibody may be selected according to the selected primary antibody, and one capable of binding to the selected primary antibody may be selected. For example, when the primary antibody is an anti-HER2 rabbit monoclonal antibody, anti-rabbit IgG antibody can be used as the secondary antibody. Such a secondary antibody can also be produced by a general method.

Besides, it is also possible that a nucleic acid molecule is used as the substance to be detected, and a nucleic acid molecule having a complementary base sequence to the nucleic acid molecule is used as the organism-related binding substance corresponding thereto.

The conjugated body in which an organism-related binding substance is coupled to the light-emitting colorant-containing particle may be produced by any known method. For example, amidation through reaction between an amine and a carboxylic acid, sulfidation through reaction between maleimide and a thiol, imidation through reaction between an aldehyde and an amine, and amination through reaction between an epoxy and an amine can be utilized. Functional groups involved in such reaction may be a functional group (functional group originating from a raw material monomer for resin) already present on the surface of a resin particle, a functional group introduced by converting a functional group present on the surface of a resin particle according to a known method, or a functional group introduced by surface modification or the like. An appropriate linker molecule may be used as needed.

Accordingly, in another aspect of the present invention, a kit for tissue immunostaining using the light-emitting colorant-containing particle of the present invention is provided. This kit includes at least the light-emitting colorant-containing particle of the present invention, a conjugated body in which an organism-related binding substance is coupled to a light-emitting colorant-containing particle or a light-emitting colorant-containing particle for preparing said conjugated body, an organism-related binding substance, and reagents. This kit further may include a primary antibody, a secondary antibody, another organism-related binding substance (for example, biotin) used in combination with the organism-related binding substance (for example, streptavidin), reagents for forming a desired conjugated body, other reagents used for immunological tissue staining, and the like as needed.

(Organism substance detection method)

A fluorescent labeling agent using the light-emitting colorant-containing particle of the present invention can be used, for example, in an organism substance detection method using immunostaining and morphology observation staining in combination for enhancing informativeness, more specifically, in an organism substance detection method including (1) a step of subjecting a tissue slice to immunostaining using a fluorescent labeling body, (2) a step of subjecting the tissue slice to morphology observation staining using a staining agent for morphology observation, and (3) a step of fluorescently observing the tissue slice having been stained. Either the immunostaining step (1) or the morphology observation staining step (2) may be conducted first.

Usually, prior to the step (1) of the above-described organism substance detection method, a tissue slice deparaffinization and antigen activation treatment are performed according to conventional methods.

In the immunostaining step (1), reaction may be caused by sequentially adding substances required to a tissue slice according to the form of the above-described fluorescent labeling agent (a conjugated body of the light-emitting colorant-containing particle and an organism-related binding substance) so that the substance to be detected can be appropriately labeled.

The morphology observation staining step (2) can be carried out according to a conventional method. With respect to morphology observation of a tissue specimen, staining using eosin in which cytoplasm, interstitium, various fibers, erythrocytes, and keratinocytes are stained red to dark red color is normally used. In addition, staining using hematoxylin in which cell nuclei, calcified parts, cartilage tissues, bacteria, and mucus are stained indigo to light blue is also normally used (the method simultaneously conducting these two types of staining is known as hematoxylin-eosin staining (HE staining)).

Usually, after the steps (1) and (2) and before the step (3), dehydration treatment with ethanol immersion, penetration treatment with immersion in an organic solvent such as xylene, embedding treatment using an embedding agent, and the like are carried out.

In the fluorescence observation step (3), the tissue slice having been subjected to immunostaining and morphology observation staining in the above-described steps was irradiated with excitation light having an appropriate wavelength according to the light-emitting colorant used, and fluorescent light emitted from the fluorescent labeling body is observed thereby. Through such steps, a predetermined biological molecule such as an antigen present within the tissue slice can be detected, which can be utilized as information for determining whether application of a molecular target drug (for example, an antibody drug "Herceptin" (TM), which is a humanized anti-HER2 monoclonal antibody) is appropriate or not.
Irradiation means similar to that used in common fluorescence observation may be used for irradiation of excitation light. For example, a stained tissue slice may be irradiated with excitation light with an appropriate wavelength and output power from a laser light source which a fluorescence microscope includes using a filter which selectively transmits a predetermined wavelength as needed. Fluorescence observation may be carried out through a lens barrel of a fluorescence microscope or may be carried out by displaying an image taken by a camera installed in a fluorescence microscope on separate display means (monitor or the like). Even when fluorescent light cannot be sufficiently observed by visual observation through a lens barrel of a fluorescence microscope, fluorescent light can be observed through image photographing by a camera in some cases depending on the light-emitting colorant. A filter which selectively transmits a predetermined wavelength may be used as needed.
It is noted that, while the same tissue slice is subjected to both immunostaining and morphology observation staining in the present invention, when an image concerning morphology observation staining is observed, irradiation with excitation light for exciting a light-emitting colorant for immunostaining is not needed, and the image may be observed under the same observation conditions as with the case of an optical microscope.

EXAMPLES

Hereinafter, the present invention is specifically described with reference to examples, but the present invention is not limited thereto. The representation "part(s)" or "%" used in the examples represents "part(s) by mass" or "% by mass" unless otherwise stated.

[Example 1]

[Production of light-emitting colorant-containing particle]

<Production of light-emitting colorant-containing particles Nos. 1 to 11, 13 to 20, and 22 to 48>

Light-emitting colorant-containing particles Nos. 1 to 11, 13 to 20, and 22 to 48 according to the present invention and comparative examples were produced according to the predetermined conditions shown in the following tables.
To a solution in which 50 μmol of a light-emitting colorant (the type described in Table I to Table III) was dissolved in 0.2 mL of the dissolution solvent described in Table I to Table III was added 20 mL of water with a surfactant (the type described in Table I to Table III) so as to achieve 0.5 vol%. The temperature of this solution was increased to the dissolution temperature described in Table I to Table III while stirring on a hot plate stirrer, and an organic resin (the type and amount described in Table I to Table III) was subsequently added thereto.
An additive (the type and amount described in Table I to Table III) was added to the solution to produce a light-emitting colorant-containing particle. The resultant dispersion liquid was centrifuged (20000 G for 90 minutes), and the particle was collected followed by washing with ultrapure water and purification.
The process of removal of the supernatant after centrifugation and redispersion into ultrapure water was repeated five times.
Surface amination treatment was conducted by dispersing 0.1 mg of the resin particle after washing into 1.5 mL of ethanol, adding 2 μL of aminopropyltrimethoxysilane "LS-3150" (Shin-Etsu Chemical Co., Ltd.), and reaction was carried out at room temperature for eight hours while stirring. The concentration of the resin particle with the surface thereof aminated was adjusted to 3 nM using phosphate-buffered saline (PBS) containing 2 mM of ethylenediaminetetraacetic acid (EDTA), a linker reagent "SM(PEG)12" (manufactured by Thermo Fisher Scientific K.K., cat. No. 22112) was added to and mixed with this solution so that the final concentration became 10 mM, and reaction was carried out at room temperature for one hour while stirring. After the reaction liquid was centrifuged at 10,000 G for 20 minutes, and the supernatant was removed, PBS containing 2 mM of EDTA was added thereto to disperse the precipitate, and centrifugation was performed again under the same conditions. A resin particle with the surface thereof modified by a PEG chain having a maleimide group at the terminal thereof was obtained by performing washing three times in the same manner.
Streptavidin into which a thiol group was introduced was produced as follows. First, 70 μL of an N-succinimidyl S-acetylthioacetate (SATA, manufactured by Pirce) aqueous solution adjusted to 64 mg/mL was added to 40 μL of a

streptavidin (Wako Pure Chemical Industries, Ltd.) aqueous solution adjusted to 1 mg/mL, and reaction was carried out at room temperature for one hour to introduce a protected thiol group to an amino group of streptavidin ($-NH-CO-CH_2-S-CO-CH_3$). Subsequently, a free thiol group was produced from the protected thiol group through hydroxylamine treatment to complete the treatment to introduce a thiol group (-SH) into streptavidin. This solution was passed through a gel filtration column (Zaba Spin Desalting Columns: Funakoshi Co., Ltd.) for desalination, and streptavidin into which a thiol group was introduced was obtained thereby.

The prepared light-emitting colorant-containing melamine particle with the surface thereof modified by a PEG chain having a maleimide group at its terminal and the prepared streptavidin into which a thiol group was introduced were mixed in PBS containing 2 mM of EDTA, and reaction was carried out for one hour to bind streptavidin to the resin particle via the PEG chain. To this reaction liquid was added 10 mM of mercaptoethanol to stop reaction. After the obtained solution was concentrated by a centrifugal filter, unreacted substances were removed using a gel filtration column for purification to obtain a streptavidin-modified light-emitting colorant-containing melamine resin particle.

<Production of light-emitting colorant-containing particles Nos. 12 and 21>

Light-emitting colorant-containing particles Nos. 12 and 21 of comparative examples were produced according to the predetermined conditions shown in the following tables.

A light-emitting colorant (the type and amount described in Table I and Table II) and 3 mL of 3-aminopropyltrimethoxysilane (manufactured by Shin-Etsu Chemical Co., Ltd., KBM903) were mixed in N,N-dimethylformamide (DMF) as a dissolution solvent to obtain an organoalkoxysilane compound.

The obtained organoalkoxysilane compound (0.6 mL) was mixed with 48 mL of 99% ethanol, 0.6 mL of tetraethoxysilane (TEOS), 2 mL of ultrapure water, and 2.0 mL of 28 mass% ammonia water at 5°C for three hours.

The mixture liquid prepared in the above-described step was centrifuged at 10000 G for 20 minutes, and the supernatant was removed. A rinsing operation in which ethanol was added to the resultant precipitate to disperse the precipitate, and the dispersion was centrifuged again was performed. Further, the same rinsing operation was repeated two times to obtain a light-emitting colorant-containing silica particle. SEM observation was performed on the obtained 1000 nanoparticles, and the average particle diameter was measured as described above.

A solution in which the concentration of the obtained light-emitting colorant-containing silica particle was adjusted to 3 nM using PBS containing 2 mM of ethylenediaminetetraacetic acid (EDTA) was prepared, SM(PEG)12 (manufactured by Thermo Fisher Scientific K.K., succinimidyl-[(N-maleimidopropionamide)-dodecaneethylene glycol]ester) was mixed with this solution so that the final concentration became 10 mM, and reaction was carried out at 5°C for one hour.

After this mixture liquid was centrifuged at 10000 G for 20 minutes, and the supernatant was removed, PBS containing 2 mM of EDTA was added to disperse the precipitate, and centrifugation was performed again. A light-emitting colorant-containing silica particle with a maleimide binding at the terminal was obtained by performing washing three times in the same manner.

Streptavidin capable of binding to the light-emitting colorant-containing silica particle was prepared as follows.

First, after 40 μL of streptavidin (Wako Pure Chemical Industries, Ltd.) adjusted to 1 mg/mL was added to 210 μL of a borate buffer, 70 μL of 2-iminothiolane hydrochloride (manufactured by Sigma-Aldrich Co., LLC.) adjusted to 64 mg/mL was added, and reaction was carried out at room temperature for one hour. A thiol group was introduced into an amino group of streptavidin thereby ($-NH-C(=NH_2^+Cl^-)-CH_2-CH_2-CH_2-SH$).

This streptavidin solution was desalted by a gel filtration column (Zaba Spin Desalting Columns: Funakoshi Co., Ltd.) to obtain streptavidin capable of binding to the above-described silica particle. The whole amount (containing 0.04 mg) of this streptavidin and 740 μL of the silica particle adjusted to 0.67 nM using PBS containing 2 mM of EDTA were mixed, and reaction was carried out at room temperature for one hour.

Reaction was stopped by adding 10 mM of mercaptoethanol. After the obtained solution was concentrated by a centrifugal filter, unreacted streptavidin and the like were removed using a gel filtration column for purification to obtain a streptavidin-modified light-emitting colorant-containing silica particle.

In Table I to Table III, the column for the organic resin shows use of the silica particle.

<Tissue staining step>

[Immunological tissue staining]

A human mammary tissue was immunostained using a staining agent for tissue staining including the light-emitting colorant-containing particle produced above. A buffer solution such as a PBS buffer solution containing 1% BSA was used herein as the staining agent for tissue staining. A tissue array slide (manufactured by Cosmo Bio Co., Ltd., product number CB-A712) was used as a slice for staining. The tissue array slide was subjected to deparaffinization followed by displacement washing with water and autoclave treatment in a 10 mM citric acid buffer solution (pH 6.0) for

15 minutes to conduct antigen activation treatment. The tissue array slide after being subjected to antigen activation treatment was washed using a PBS buffer solution. Thereafter, an anti-HER2 rabbit monoclonal antibody (4B5) diluted to 0.05 nM by a 1% BSA-containing PBS buffer solution was reacted with the tissue slice for two hours. After washing with PBS, reaction with a biotin-labeled anti-rabbit antibody diluted by a 1% BSA-containing PBS buffer solution was carried out for 30 minutes. Reaction was further carried out for two hours using the above-described staining agent for tissue staining, that is, with the colorant resin particle having streptavidin produced above, followed by washing to obtain an immunohistochemically stained slice. The obtained immunohistochemically stained slice was immersed in a neutral 4% paraformaldehyde aqueous buffer solution for ten minutes to conduct fixing treatment.

[Morphology staining]

The immunohistochemically stained slice having been subjected to fixing treatment as described above was stained with HE, the slice after staining was immersed in ethanol to be dehydrated, and the dehydrated slice was further immersed in xylene followed by air drying for penetration to obtain a doubly stained slice. The light resistance evaluation described later is not affected even when HE staining is conducted as morphology staining.

[Embedding]

Entellan new (manufactured by Merck KGaA), which is a xylene-based embedding agent, was dropped on the slice subjected to the above-described morphology staining, and the resultant product was then covered with a cover glass and embedded.

<Evaluation on tissue sample>

Excitation wavelength conditions at the time of microscope observation and image acquisition were set so that irradiation light intensity at the vicinity of the central portion of the visual field became 900 W/cm$^2$ for excitation of 575 to 600 nm, irradiation light intensity at the vicinity of the central portion of the visual field became 900 W/cm$^2$ for excitation of 450 to 490 nm, irradiation light intensity at the vicinity of the central portion of the visual field became 500 W/cm$^2$ for excitation of 365 nm, and irradiation light intensity at the vicinity of the central portion of the visual field became 500 W/cm$^2$ for excitation of 345 to 395 nm. Irradiation light intensity is calculated by measuring a light energy value in the case where a 40-power objective lens is mounted by power meter 8230 manufactured by ADVANTEST CORPORATION and dividing the obtained value by a visual field area (about $\varphi$ 450 $\mu$m) with a 40-power lens irradiation. An exposure time at the time of image acquisition was arbitrarily set so that luminance of an image was not saturated, and an image was acquired. For example, measurement was carried out at 1000 msec. The image acquired was not corrected, and the luminance value in a full-range was made to be linear.

The shape of cells (position of cell membranes) was determined by image processing using a stained image for morphology observation and superposed on an immunostained image, and luminescent points representing the streptavidin-modified light-emitting colorant-containing particle labeling HER2 protein expressed on cell membranes were extracted and counted as the number of light-emitting colorant-containing particles. With respect to a luminescent point having luminance of a predetermined value or higher among the luminescent points on cell membranes, the luminance of the luminescent point was divided by luminance per one light-emitting colorant-containing particle and converted into the number of light-emitting colorant-containing particles.

An average value of the number of light-emitting colorant-containing particles per unit area (100 $\mu$m$^2$) or an average value of the number of light-emitting colorant-containing particles per one cell in 100 cells selected for each of five visual fields per one staining slide was measured.

Furthermore, the content of the light-emitting colorant was measured by the method described above. The average particle diameter was measured as follows: an electron micrograph was taken using a scanning electron microscope (SEM), a cross-sectional area of the light-emitting colorant-containing particle was measured, and the average particle diameter was measured as a diameter (circular area-equivalent diameter) of a circle having an area equivalent to the measured value.

The results from the above are shown in Table I to Table III.

[Table 1]

Table I

| Light-emitting colorant-containing particle No. | Light-emitting colorant | | | | Surfactant | Dissolution temperature [°C] | Organic resin | | Additive | | Light-emitting colorant-containing particle | | | Remarks |
|---|---|---|---|---|---|---|---|---|---|---|---|---|---|---|
| | Structure No. | AlogP | Free volume ratio [%] | Dissolution solvent | Type | | Type | Amount [g] | Type | Amount [mmol] | Particle diameter [nm] | Light-emitting colorant content [mol%] | The number of light-emitting colorant-containing particles per unit area after HER2 staining | |
| 1 | 1 | 21.49 | 35.85 | Acetone | EMULGEN 409PV | 50 | Melamine resin | 1.2 | Dodecylbenzenesulfonic acid | 0.02 | 80 | 23 | 5235 | Inventive |
| 2 | 1 | 21.49 | 35.85 | Acetone | EMULGEN 150 | 55 | Urea resin | 1.2 | - | - | 82 | 20 | 4892 | Inventive |
| 3 | 1 | 21.49 | 35.85 | Chloroform | EMULGEN 430 | 60 | Melamine resin | 1.2 | Dodecylbenzenesulfonic acid | 0.02 | 80 | 26 | 5190 | Inventive |
| 4 | 2 | 25.55 | 38.90 | Acetone | EMULGEN 150 | 55 | Melamine resin | 1.4 | p-Toluenesulfonic acid | 0.01 | 32 | 14 | 10174 | Inventive |
| 5 | 2 | 25.55 | 38.90 | Acetone | EMULGEN 150 | 55 | Melamine resin | 1.4 | p-Toluenesulfonic acid | 0.02 | 45 | 18 | 9520 | Inventive |
| 6 | 2 | 25.55 | 38.90 | Acetone | EMULGEN 150 | 55 | Melamine resin | 1.4 | Dodecylbenzenesulfonic acid | 0.01 | 60 | 21 | 7285 | Inventive |
| 7 | 2 | 25.55 | 38.90 | Acetone | EMULGEN 430 | 55 | Melamine resin | 1.4 | Dodecylbenzenesulfonic acid | 0.01 | 71 | 23 | 6523 | Inventive |
| 8 | 2 | 25.55 | 38.90 | Acetone | EMULGEN 430 | 55 | Melamine resin | 1.4 | Dodecylbenzenesulfonic acid | 0.02 | 81 | 25 | 5182 | Inventive |

(continued)

| Light-emitting colorant-containing particle No. | Light-emitting colorant | | | | Surfactant | Dissolution temperature [°C] | Organic resin | | Additive | | Light-emitting colorant-containing particle | | | Remarks |
|---|---|---|---|---|---|---|---|---|---|---|---|---|---|---|
| | Structure No. | AlogP | Free volume ratio [%] | Dissolution solvent | Type | | Type | Amount [g] | Type | Amount [mmol] | Particle diameter [nm] | Light-emitting colorant content [mol%] | The number of light-emitting colorant-containing particles per unit area after HER2 staining | |
| 9 | 2 | 25.55 | 38.90 | Chloroform | EMULGEN 430 | 60 | Melamine resin | 1.4 | Dodecylbenzenesulfonic acid | 0.02 | 100 | 32 | 4985 | Inventive |
| 10 | 2 | 25.55 | 38.90 | Ethanol | EMULGEN 150 | 80 | Melamine resin | 1.4 | Dodecylbenzenesulfonic acid | 0.02 | 140 | 42 | 495 | Comparative Example |
| 11 | 2 | 25.55 | 38.90 | Acetone | EMULGEN 409PV | 55 | Melamine resin | 0.8 | Dodecylbenzenesulfonic acid | 0.02 | 142 | 25 | 243 | Comparative Example |
| 12 | 2 | 25.55 | 38.90 | DMF | - | - | Silica particle | 1.5 | - | - | 95 | 3 | 165 | Comparative Example |
| 13 | 3 | 41.34 | 40.68 | Acetone | EMULGEN 430 | 55 | Melamine resin | 1.8 | Dodecylbenzenesulfonic acid | 0.02 | 81 | 24 | 6693 | Inventive |
| 14 | 4 | 13.84 | 58.66 | Acetone | EMULGEN 150 | 55 | PMMA | 0.8 | - | - | 80 | 22 | 6128 | Inventive |
| 15 | 5 | 16.23 | 56.30 | Chloroform | EMULGEN 150 | 60 | Polystyrene | 0.7 | - | - | 82 | 23 | 6849 | Inventive |
| 16 | 6 | 16.48 | 40.62 | Acetone | EMULGEN 409PV | 55 | PMMA | 0.8 | - | - | 81 | 25 | 5234 | Inventive |

[Table 2]

Table II

| Light-emitting colorant-containing particle No. | Light-emitting colorant | | | | Surfactant | Dissolution temperature [°C] | Organic resin | | Additive | | Light-emitting colorant-containing particle | | | Remarks |
|---|---|---|---|---|---|---|---|---|---|---|---|---|---|---|
| | Structure No. | AlogP | Free volume ratio [%] | Dissolution solvent | Type | | Type | Amount [g] | Type | Amount [mmol] | Particle diameter [nm] | Light-emitting colorant content [mol%] | The number of light-emitting colorant-containing particles per unit area after HER2 staining | |
| 17 | 9 | 4.10 | 36.79 | Water | NEOPELEX G-15 | 70 | Urea resin | 0.5 | - | - | 83 | 12 | 3908 | Inventive |
| 18 | 13 | 4.72 | 42.38 | Acetone | EMULGEN 409PV | 55 | Melamine resin | 0.4 | Dodecylbenzenesulfonic acid | 0.02 | 80 | 12 | 5320 | Inventive |
| 19 | 13 | 4.72 | 42.38 | Acetone | EMULGEN 430 | 55 | PMMA | 0.4 | - | - | 82 | 11 | 5486 | Inventive |
| 20 | 13 | 4.72 | 42.37 | Acetone | EMULGEN 150 | 55 | Melamine resin | 0.4 | Dodecylbenzenesulfonic acid | 0.02 | 81 | 11 | 5763 | Inventive |
| 21 | 13 | 4.72 | 42.38 | DMF | - | - | Silica particle | 0.4 | - | - | 98 | 12 | 351 | Comparative Example |
| 22 | 49 | 15.14 | 36.62 | Water | EMULGEN 409PV | 80 | Melamine resin | 2.0 | Dodecylbenzenesulfonic acid | 0.02 | 82 | 20 | 4983 | Inventive |
| 23 | 14 | 4.85 | 41.48 | Acetone | EMULGEN 430 | 55 | Melamine resin | 1.0 | Dodecylbenzenesulfonic acid | 0.02 | 81 | 12 | 5811 | Inventive |
| 24 | 15 | 2.41 | 31.75 | Acetone | EMAL 20C | 55 | Melamine resin | 0.4 | p-Toluenesulfonic acid | 0.02 | 83 | 11 | 4108 | Inventive |
| 25 | 17 | 2.08 | 34.07 | Acetone | EMULGEN 409PV | 55 | Urea resin | 0.4 | - | - | 81 | 12 | 4735 | Inventive |

(continued)

| Light-emitting colorant-containing particle No. | Light-emitting colorant | | | | Surfactant | Dissolution temperature [°C] | Organic resin | | Additive | | Light-emitting colorant-containing particle | | | Remarks |
|---|---|---|---|---|---|---|---|---|---|---|---|---|---|---|
| | Structure No. | AlogP | Free volume ratio [%] | Dissolution solvent | Type | | Type | Amount [g] | Type | Amount [mmol] | Particle diameter [nm] | Light-emitting colorant content [mol%] | The number of light-emitting colorant-containing particles per unit area after HER2 staining | |
| 26 | 19 | 5.38 | 47.76 | Acetone | EMAL 20C | 55 | Melamine resin | 0.5 | Dodecylbenzenesulfonic acid | 0.02 | 79 | 12 | 6421 | Inventive |
| 27 | 21 | 3.72 | 3.30 | Acetone | NEOPELEX G-15 | 55 | PMMA | 0.4 | - | - | 80 | 10 | 2985 | Inventive |
| 28 | 22 | 14.78 | 41.84 | Chloroform | EMULGEN 430 | 60 | Melamine resin | 0.7 | Dodecylbenzenesulfonic acid | 0.02 | 81 | 25 | 6373 | Inventive |
| 29 | 26 | 4.08 | 34.26 | Acetone | EMAL 20C | 55 | Melamine resin | 0.3 | Dodecylbenzenesulfonic acid | 0.02 | 79 | 13 | 5155 | Inventive |
| 30 | 27 | 4.39 | 36.21 | Acetone | EMULGEN 409PV | 55 | PMMA | 0.3 | - | - | 78 | 11 | 5986 | Inventive |
| 31 | 28 | 6.12 | 32.28 | Acetone | EMAL 20C | 55 | Melamine resin | 0.4 | Dodecylbenzenesulfonic acid | 0.02 | 81 | 12 | 5622 | Inventive |
| 32 | 29 | 2.84 | 15.25 | Acetone | NEOPELEX G-15 | 55 | Urea resin | 0.3 | - | - | 82 | 11 | 2863 | Inventive |

[Table 3]

Table III

| Light-emitting colorant-containing particle No. | Light-emitting colorant | | | | Surfactant | Dissolution temperature [°C] | Organic resin | | Additive | | Light-emitting colorant-containing particle | | | Remarks |
|---|---|---|---|---|---|---|---|---|---|---|---|---|---|---|
| | Structure No. | AlogP | Free volume ratio [%] | Dissolution solvent | Type | | Type | Amount [g] | Type | Amount [mmol] | Particle diameter [nm] | Light-emitting colorant content [mol%] | The number of light-emitting colorant-containing particles per unit area after HER2 staining | |
| 33 | 30 | 16.48 | 29.47 | Dimethylformamide | EMULGEN 150 | 70 | Polystyrene | 0.8 | - | - | 79 | 26 | 2045 | Inventive |
| 34 | 31 | 6.28 | 51.24 | Acetone | EMULGEN 430 | 55 | Melamine resin | 0.5 | Dodecylbenzenesulfonic acid | 0.02 | 80 | 13 | 6892 | Inventive |
| 35 | 32 | 5.02 | 41.02 | Dimethylformamide | EMAL 20C | 70 | Melamine resin | 0.4 | Dodecylbenzenesulfonic acid | 0.02 | 81 | 11 | 6490 | Inventive |
| 36 | 33 | 4.10 | 37.51 | Dimethylformamide | EMULGEN 409PV | 70 | Melamine resin | 0.3 | p-Toluenesulfonic acid | 0.02 | 82 | 11 | 5895 | Inventive |
| 37 | 34 | 2.73 | 42.46 | Acetone | EMAL 20C | 55 | Melamine resin | 0.6 | Sulfamic acid | 0.02 | 78 | 11 | 6982 | Inventive |
| 38 | 35 | 3.71 | 39.98 | Water | EMULGEN 430 | 70 | Urea resin | 0.6 | - | - | 81 | 12 | 5991 | Inventive |
| 39 | 36 | 4.06 | 47.54 | Acetone | EMULGEN 409PV | 55 | Melamine resin | 0.7 | Sulfamic acid | 0.02 | 80 | 12 | 6472 | Inventive |
| 40 | 40 | 6.00 | 33.47 | Water | EMAL 20C | 70 | Melamine resin | 0.4 | p-Toluenesulfonic acid | 0.02 | 82 | 12 | 4765 | Inventive |

(continued)

| Light-emitting colorant-containing particle No. | Light-emitting colorant | | | | Surfactant | Dissolution temperature [°C] | Organic resin | | Additive | | Light-emitting colorant-containing particle | | | Remarks |
|---|---|---|---|---|---|---|---|---|---|---|---|---|---|---|
| | Structure No. | AlogP | Free volume ratio [%] | Dissolution solvent | Type | | Type | Amount [g] | Type | Amount [mmol] | Particle diameter [nm] | Light-emitting colorant content [mol%] | The number of light-emitting colorant-containing particles per unit area after HER2 staining | |
| 41 | 44 | 16.83 | 44.81 | Chloroform | EMULGEN 430 | 60 | Melamine resin | 0.7 | Dodecylbenzenesulfonic acid | 0.02 | 79 | 22 | 6281 | Inventive |
| 42 | 47 | 17.91 | 38.03 | Chloroform | EMULGEN 409PV | 60 | Melamine resin | 1.0 | Dodecylbenzenesulfonic acid | 0.02 | 80 | 22 | 3282 | Inventive |
| 43 | 48 | 6.70 | 42.41 | Acetone | EMULGEN 430 | 55 | Melamine resin | 0.5 | Sulfamic acid | 0.02 | 81 | 15 | 6026 | Inventive |
| 44 | 54 | 24.21 | 37.81 | Chloroform | EMULGEN 150 | 60 | Melamine resin | 1.1 | Dodecylbenzenesulfonic acid | 0.02 | 78 | 25 | 5991 | Inventive |
| 45 | 55 | 22.69 | 48.35 | Acetone | EMULGEN 430 | 55 | Melamine resin | 1.1 | Dodecylbenzenesulfonic acid | 0.02 | 79 | 28 | 5580 | Inventive |
| 46 | 56 | 24.589 | 48.59 | Chloroform | EMULGEN 150 | 60 | Melamine resin | 1.2 | Dodecylbenzenesulfonic acid | 0.02 | 80 | 30 | 5892 | Inventive |
| 47 | 57 | 17.194 | 44.43 | Acetone | EMULGEN 409PV | 55 | Melamine resin | 0.8 | Dodecylbenzenesulfonic acid | 0.02 | 82 | 28 | 6983 | Inventive |
| 48 | 58 | 63.45 | 66.21 | Acetone | EMULGEN 430 | 55 | Urea resin | 0.6 | - | - | 80 | 7 | 863 | Comparative Example |

From Table I to Table III, it is found that in the light-emitting colorant-containing particle of the present invention, even with a small average particle diameter, the average molecular weight of the light-emitting colorant-containing particle per unit volume is large, and light-emitting luminance is high.

Specifically, see the following.

1. It is found, from the light-emitting colorant-containing particles No. 4 to No. 11, that when the particle diameter exceeds 100 nm, the number of light-emitting colorant-containing particles per unit area significantly decreases even when the same light-emitting colorant is used. In addition, from the fact that as the particle diameter increases, the number of light-emitting colorant-containing particles per unit area decreases, it is found that while there is a point which cannot be recognized with a large particle exceeding 100 nm, when a particle with a small particle diameter is used, there are many recognized points, and spatial resolution is high.
2. It is found, from the light-emitting colorant-containing particles No. 8, No. 12, and Nos. 18 to 21, that since the organic resin has a smaller particle diameter than the silica particle, and the content of the light-emitting colorant is large, the number of light-emitting colorant-containing particles per unit area is much larger even the same light-emitting colorant is used.
3. When the AlogP value is less than 10, the content of the light-emitting colorant is small (below 20 mol%). The cause is presumed to be leakage into water because of high hydrophilicity (see paragraph 0083).
4. When the AlogP value exceeds 60, the content of the light emitting colorant is further smaller (below 10 mol%). Therefore, the number of light-emitting colorant-containing particles per unit area significantly decreases. The cause is presumed to be non-incorporation into the light-emitting colorant-containing particle because of high hydrophobicity (see paragraph 0083).

In addition, it has been also confirmed that, also in a case of relatively long time of irradiation with excitation light, variation in the number of light-emitting colorant-containing particles per unit area is small, and high light resistance is provided.

[Example 2]

<Measurement of light-emission wavelength of light-emitting colorant-containing particle>

Measurement results of the maximum fluorescent light emission wavelength measured at 25°C and at a concentration at which the maximum value of absorbance of the colorant contained in the light-emitting colorant-containing particle in methanol or ethanol became 1.0 and of the maximum fluorescent light emission wavelength measured at 25°C and at a concentration at which the maximum value of absorbance of the light-emitting colorant-containing particle in an aqueous solution became 1.0 are shown in the following table. From the viewpoint of solubility, the light-emitting colorants were dissolved using ethanol as a solvent for the light-emitting colorants of structure Nos. 1 and 2 and using methanol as a solvent for the light-emitting colorants of structure Nos. 14, 15, and 17.

The results from the above are shown in Table IV.

[Table 4]

Table IV

| Light-emitting colorant-containing particle No. | Structure No. | Maximum fluorescent light emission wavelength [nm] | | Remarks |
|---|---|---|---|---|
| | | Light-emitting colorant (methanol or ethanol) | Light-emitting colorant-containing particle (aqueous solution) | |
| 1 | 1 | 600 | 608 | Inventive |
| 2 | 1 | 600 | 605 | Inventive |
| 8 | 2 | 602 | 608 | Inventive |
| 10 | 2 | 602 | 605 | Comparative Example |

(continued)

| Light-emitting colorant-containing particle No. | Structure No. | Maximum fluorescent light emission wavelength [nm] | | Remarks |
|---|---|---|---|---|
| | | Light-emitting colorant (methanol or ethanol) | Light-emitting colorant-containing particle (aqueous solution) | |
| 11 | 2 | 602 | 605 | Comparative Example |
| 12 | 2 | 602 | 603 | Comparative Example |
| 23 | 14 | 529 | 535 | Inventive |
| 24 | 15 | 571 | 578 | Inventive |
| 25 | 17 | 631 | 637 | Inventive |

From Table IV, it is found that the maximum fluorescent light emission wavelength of the light-emitting colorant-containing particle of the present invention in an aqueous solution is at least 5 nm longer than the maximum fluorescent light emission wavelength of the light-emitting colorant in methanol or ethanol.

INDUSTRIAL APPLICABILITY

The light-emitting colorant-containing particle of the present invention has a small particle diameter, can emit high luminance light, and can be used for a labeling agent for pathological diagnosis. For example, the light-emitting colorant-containing particle is preferably used as a labeling agent for pathological diagnosis for labeling a substance to be detected included in a tissue slice and enabling fluorescence observation in immunostaining.

## Claims

1. A light-emitting colorant-containing particle containing an organic resin and a light-emitting colorant, wherein a content of the light-emitting colorant is in a range of 10 to 80 mol% based on a total amount of a monomer forming the organic resin and the light-emitting colorant, and the particle has an average particle diameter in a range of 1 to 100 nm.

2. The light-emitting colorant-containing particle according to claim 1, wherein the content of the light-emitting colorant is in a range of 20 to 60 mol% based on the total amount of a monomer forming the organic resin and the light-emitting colorant.

3. The light-emitting colorant-containing particle according to claim 1 or 2, wherein an AlogP value of the light-emitting colorant is in a range of 10 to 60.

4. The light-emitting colorant-containing particle according to any one of claims 1 to 3, wherein a free volume ratio of the light-emitting colorant is in a range of 10 to 70%.

5. The light-emitting colorant-containing particle according to any one of claims 1 to 4, wherein a maximum fluorescent light emission wavelength measured at 25°C and at a concentration at which a maximum value of absorbance of the light-emitting colorant-containing particle in an aqueous solution becomes 1.0 is at least 5 nm longer than a maximum fluorescent light emission wavelength measured at 25°C and at a concentration at which a maximum value of absorbance of the light-emitting colorant in methanol or ethanol becomes 1.0.

6. The light-emitting colorant-containing particle according to any one of claims 1 to 5, wherein the light-emitting colorant has a structure represented by general formula (A1) or general formula (B1) below:

[Formula 1]

General formula (A1)

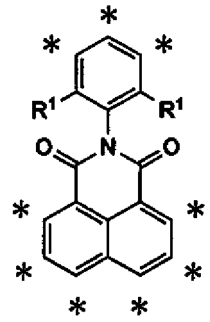

wherein a plurality of $R^1$ each independently represent a hydrogen atom or a substituent, and at least one $R^1$ represents a group having 4 to 30 carbon atoms; and the benzene ring or naphthalene ring optionally further has a substituent, and * represents a position of a substituent which the benzene ring or naphthalene ring optionally has,

[Formula 2]

General Formula (B1)

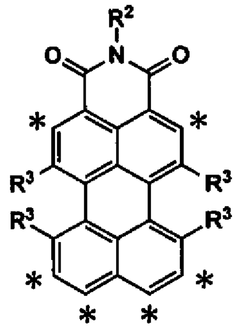

wherein $R^2$ represents a substituted or unsubstituted alkyl group, aryl group, or heteroaryl group; a plurality of $R^3$ each independently represent a hydrogen atom or a group having a structure represented by general formula (B2) below, and at least one $R^3$ represents a group having a structure represented by general formula (B2) below; and the naphthalene ring optionally further has a substituent, and * represents a position of a substituent which the naphthalene ring optionally has, and

[Formula 3]

General Formula (B2)

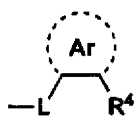

wherein Ar represents an aryl ring or a heteroaryl ring; $R^4$ represents a substituent other than a phenyl group; when there are two or more groups represented by general formula (B2), two $R^4$ are optionally coupled to each other; L represents a single bond, an oxygen atom, a sulfur atom, or -NR'-; and R' represents a hydrogen atom, an alkyl group, an aryl group, or a heteroaryl group.

**7.** A labeling agent for pathological diagnosis using the light-emitting colorant-containing particle according to any one of claims 1 to 6.

**INTERNATIONAL SEARCH REPORT**

International application No. PCT/JP2019/039803

A. CLASSIFICATION OF SUBJECT MATTER
Int.Cl. C09K11/06(2006.01)i, C08J3/12(2006.01)i, C08K5/16(2006.01)i, C08L101/00(2006.01)i, G01N33/483(2006.01)i, C09B5/62(2006.01)n, C09B57/08(2006.01)n, C09B67/46(2006.01)n

According to International Patent Classification (IPC) or to both national classification and IPC

B. FIELDS SEARCHED

Minimum documentation searched (classification system followed by classification symbols)
Int.Cl. C09K11/06, C08J3/12, C08K5/16, C08L101/00, G01N33/483, C09B5/62, C09B57/08, C09B67/46

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2015/163209 A1 (KONICA MINOLTA, INC.) 29 October 2015, examples, table 1 & US 2017/0045452 A1 examples, table 1 & EP 3136098 A1 | 1-7<br>1-7 |
| X<br>Y | WO 2016/117054 A1 (KONICA MINOLTA, INC.) 28 July 2016, example 14, table 2 & US 2018/0011086 A1 example 14, table 2 & EP 3249403 A1 | 1-7<br>1-7 |

☒ Further documents are listed in the continuation of Box C.

☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 27 November 2019 (27.11.2019) | 10 December 2019 (10.12.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

INTERNATIONAL SEARCH REPORT

International application No.
PCT/JP2019/039803

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 2015-117980 A (KONICA MINOLTA, INC.) 25 June 2015, examples, table 1 (Family: none) | 1-7<br>1-7 |
| X<br>Y | JP 2017-044482 A (KONICA MINOLTA, INC.) 02 March 2017, examples, table 1 (Family: none) | 1-7<br>1-7 |
| X<br>Y | JP 2018-119971 A (KONICA MINOLTA, INC.) 02 August 2018, paragraphs [0010], [0014], [0039], examples & US 2016/0011179 A1 paragraphs [0012], [0018], [0043], examples & WO 2014/136776 A1 & EP 2966435 A1 | 1-7<br>1-7 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 4249464 B
- WO 2014006987 A

### Non-patent literature cited in the description

- **GHOSE, ARUP K. ; VELLARKAD N. VISWANADHAN ; JOHN J. WENDOLOSKI.** *The Journal of Physical Chemistry A,* 1998, vol. 102, 3762
- Materials Science (Suite). Schrodinger, Inc,